(19) Europäisches Patentamt
European Patent Office
Office européen des brevets

(11) EP 3 988 600 A1

(12) EUROPÄISCHE PATENTANMELDUNG

(43) Veröffentlichungstag:
**27.04.2022 Patentblatt 2022/17**

(21) Anmeldenummer: **20202874.2**

(22) Anmeldetag: **20.10.2020**

(51) Internationale Patentklassifikation (IPC):
***C08G 64/30*** *(2006.01)* ***C08G 64/34*** *(2006.01)*
***C08G 65/26*** *(2006.01)*

(52) Gemeinsame Patentklassifikation (CPC):
**C08G 64/34; C08G 64/30; C08G 65/2603; C08G 65/2663**

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**
Benannte Validierungsstaaten:
**KH MA MD TN**

(71) Anmelder: **Covestro Deutschland AG**
**51373 Leverkusen (DE)**

(72) Erfinder:
- **Wolf, Aurel**
  **42489 Wülfrath (DE)**
- **Laemmerhold, Kai**
  **52078 Aachen (DE)**
- **Hofmann, Joerg**
  **47800 Krefeld (DE)**
- **Walker, Karolina**
  **50739 Köln (DE)**
- **Guertler, Christoph**
  **50735 Köln (DE)**
- **Schuetze, Mike**
  **51379 Leverkusen (DE)**

(74) Vertreter: **Levpat**
**c/o Covestro AG**
**Gebäude 4825**
**51365 Leverkusen (DE)**

# (54) VERFAHREN ZUR HERSTELLUNG VON POLYETHERCARBONATALKOHOLEN

(57) Gegenstand der Erfindung ist ein Verfahren zur Herstellung von Polyethercarbonatalkoholen durch die Schritte
(i) Anlagerung von cyclischem Carbonat an eine H-funktionelle Startersubstanz in Gegenwart eines Katalysators A
zur Bildung eines Gemisches enthaltend Polyethercarbonatalkohol,
(ii) gegebenenfalls Abtrennung des Katalysators A vom Gemisch aus Schritt (i),
(iii) Anlagerung von Alkylenoxid und Kohlenstoffdioxid an den aus Schritt (i) oder (ii) erhaltenen Polyethercarbonatalkohol in Anwesenheit eines Katalysators B.

EP 3 988 600 A1

**Beschreibung**

Die vorliegende Erfindung betrifft ein Verfahren zur Herstellung von Polyethercarbonatalkoholen, die erhaltenen Polyethercarbonatalkohole sowie deren Verwendung.

Die Herstellung von Polyethercarbonatalkoholen durch katalytische Umsetzung von Alkylenoxiden (Epoxiden) und Kohlendioxid in Anwesenheit von H-funktionellen Startersubstanzen ("Starter") wird seit mehr als 40 Jahren intensiv untersucht (z. B. Inoue et al, Copolymerization of Carbon Dioxide and Epoxide with Organometallic Compounds; Die Makromolekulare Chemie 130, 210-220, 1969). Diese Reaktion ist in Schema (Ia) schematisch dargestellt, wobei R für einen organischen Rest wie Alkyl, Alkylaryl oder Aryl steht, der jeweils auch Heteroatome wie beispielsweise O, S, Si usw. enthalten kann, und wobei e, f und g für eine ganzzahlige Zahl stehen, und wobei das hier im Schema (Ia) gezeigte Produkt für das Polyethercarbonatalkohol lediglich so verstanden werden soll, dass sich Blöcke mit der gezeigten Struktur im erhaltenen Polyethercarbonatalkohol prinzipiell wiederfinden können, die Reihenfolge, Anzahl und Länge der Blöcke sowie die OH-Funktionalität des Starters aber variieren kann und nicht auf das in Schema (Ia) gezeigte Polyethercarbonatalkohol beschränkt ist. Diese Reaktion (siehe Schema (Ia)) ist ökologisch sehr vorteilhaft, da diese Reaktion die Umsetzung eines Treibhausgases wie $CO_2$ zu einem Polymer darstellt. Als weiteres Produkt, eigentlich Nebenprodukt, entsteht das in Schema (Ia) gezeigte cyclische Carbonat (beispielsweise für R = $CH_3$ Propylencarbonat).

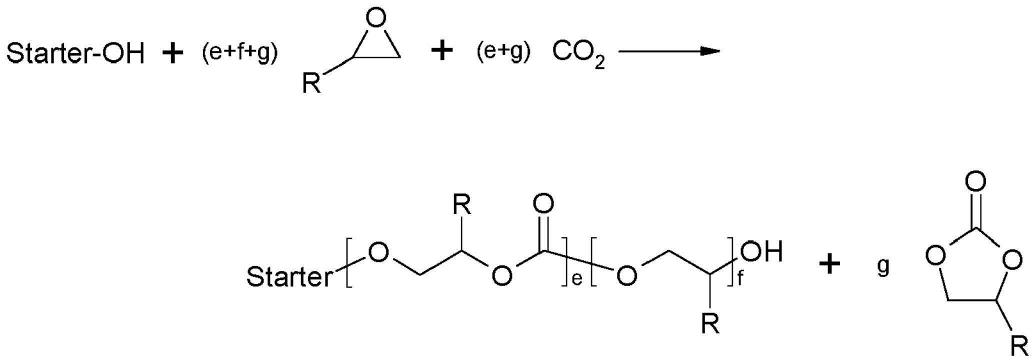

(Ia)

In WO-A 2008/092767 wird ein Verfahren zur Herstellung von Polyethercarbonatpolyolen durch Anlagerung von Alkylenoxiden und Kohlendioxid an H-funktionelle Startersubstanzen unter Verwendung von DMC-Katalysatoren offenbart, wobei eine oder mehrere höhermolekulare Startersubstanzen (z.B. Polypropylenoxid der Molmasse 460 g/mol) im Reaktor vorgelegt werden und eine oder mehrere niedermolekulare Startersubstanzen (z.B. Monopropylenglykol; Molmasse 76 g/mol; siehe Beispiel 1) sowie Alkylenoxid während der Reaktion kontinuierlich in den Reaktor zudosiert werden. Gemäß WO-A 2008/092767 ist die Menge des ins Polymer eingebauten Kohlendioxids abhängig vom $CO_2$-Druck im Reaktor, wobei ein höherer $CO_2$-Druck einen höheren Einbau von Kohlendioxid ins Polymer zur Folge hat. Dies hat die Nachteile, dass in der Anschaffung kostenintensive Hochdruckapparaturen für eine großtechnische Herstellung von Polyethercarbonatpolyolen erforderlich sind und gleichzeitig wegen des relativ großen Gasvolumens ein aufwendiges Sicherheitskonzept bereitgestellt werden muss.

Ebenfalls offenbart ist der Einsatz von $Na_3VO_4$ und $Na_2WO_4$ als Katalysatoren für die Herstellung von Polyethercarbonatpolyolen durch Anlagerung cyclischen Ethylencarbonats an Monoethylenglykol und Diethylenglykol (R.F. Harris, Journal of Applied Polymer Science, 1989, 37, 183-200).

Es war Aufgabe der vorliegenden Erfindung, ein Verfahren zur Herstellung von Polyethercarbonatalkoholen bereitzustellen, wobei das Verfahren zu einem verbesserten $CO_2$-Einbau führt. Verbesserter $CO_2$-Einbau im Sinne der Erfindung bedeutet, dass ein erhöhter Einbau von $CO_2$ im erhaltenen Polyethercarbonatalkohol erzielt werden kann oder der Druck im Verfahren verringert werden kann und trotzdem ein vergleichbarer $CO_2$-Einbau erfolgt wie mit Verfahren im Stand der Technik.

Überraschend wurde gefunden, dass Polyethercarbonatalkohole, die einen höheren Einbau von $CO_2$ aufweisen, erhalten werden durch ein Verfahren zur Herstellung von Polyethercarbonatalkoholen durch die Schritte:

(i) Anlagerung von cyclischem Carbonat an eine H-funktionelle Startersubstanz in Gegenwart eines Katalysators A zur Bildung eines Gemisches enthaltend Polyethercarbonatalkohol,
(ii) gegebenenfalls Abtrennung des Katalysators A vom Gemisch aus Schritt (i),
(iii) Anlagerung von Alkylenoxid und Kohlenstoffdioxid an den aus Schritt (i) oder (ii) erhaltenen Polyethercarbonatalkohol in Anwesenheit eines Katalysators B.

Zusätzlich führt das erfindungsgemäße Verfahren zu einer verbesserten $CO_2$-Bilanz, da das aus $CO_2$ und

Alkylenoxid gebildete cyclische Carbonat (siehe Schema (Ia)) zumindest teilweise in den Polyethercarbonatalkohol eingebaut wird.
Charakteristisch für die erfindungsgemäß hergestellten Polyethercarbonatalkohole ist, dass diese zwischen den Carbonatgruppen auch Ethergruppen enthalten. In Bezug auf Formel (Ib) bedeutet dies, dass das Verhältnis von e/f bevorzugt von 2 : 1 bis 1 : 20, besonders bevorzugt von 1,5 : 1 bis 1 : 10 beträgt.

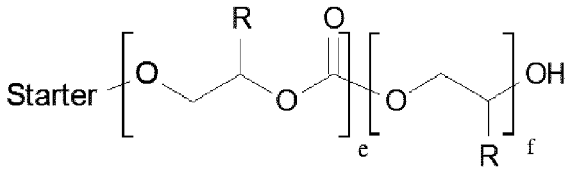

(Ib)

Schritt (i):

In Schritt (i) kann zunächst eine H-funktionelle Startersubstanz und cyclisches Carbonat im Reaktor vorgelegt werden. Es kann dabei auch nur eine Teilmenge der H-funktionellen Startersubstanz und/oder eine Teilmenge cyclischen Carbonats im Reaktor vorgelegt werden. Anschließend wird gegebenenfalls die für die ringöffnende Polymerisation benötigte Menge an Katalysator A in den Reaktor gegeben. Die Reihenfolge der Zugabe ist dabei nicht entscheidend. Es kann auch erst der Katalysator A und anschließend eine H-funktionelle Startersubstanz und cyclisches Carbonat in den Reaktor gefüllt werden. Alternativ kann auch erst der Katalysator A in einer H-funktionellen Startersubstanz suspendiert und anschließend die Suspension in den Reaktor gefüllt werden.
Der Katalysator A wird vorzugsweise in einer Menge eingesetzt, so dass der Gehalt an Katalysator A im resultierenden Reaktionsprodukt 10 bis 50000 ppm, besonders bevorzugt 20 bis 30000 ppm und höchst bevorzugt 50 bis 20000 ppm beträgt.
In einer bevorzugten Ausführungsform wird in das resultierende Gemisch aus (a) einer Teilmenge H-funktioneller Startersubstanz, (b) Katalysator A und (c) cyclischen Carbonats bei einer Temperatur von 20°C bis 120°C, besonders bevorzugt von 40°C bis 100°C Inertgas (beispielsweise Argon oder Stickstoff) eingeleitet.
In einer alternativen bevorzugten Ausführungsform wird das resultierende Gemisch aus (a) einer Teilmenge H-funktioneller Startersubstanz, (b) Katalysator A und (c) cyclischen Carbonats bei einer Temperatur von 20°C bis 120°C, besonders bevorzugt von 40°C bis 100°C mindestens einmal, vorzugsweise dreimal mit 1,5 bar bis 10 bar (absolut), besonders bevorzugt 3 bar bis 6 bar (absolut) eines Inertgases (beispielsweise Argon oder Stickstoff), beaufschlagt und jeweils anschließend der Überdruck auf ca. 1 bar (absolut) reduziert.
Der Katalysator A kann in fester Form oder als Suspension in cyclischem Carbonat, in H-funktioneller Startersubstanz oder in einer Mischung aus den genannten zugegeben werden.
In einer weiteren bevorzugten Ausführungsform wird in einem ersten Schritt eine Teilmenge der H-funktionellen Startersubstanzen und cyclisches Carbonat vorgelegt und in einem anschließenden zweiten Schritt die Temperatur der Teilmenge H-funktioneller Startersubstanz und des cyclischen Carbonats auf 40°C bis 120°C, bevorzugt 40°C bis 100°C gebracht und/oder der Druck im Reaktor auf weniger als 500 mbar, bevorzugt 5 mbar bis 100 mbar erniedrigt, wobei gegebenenfalls ein Inertgas-Strom (beispielsweise von Argon oder Stickstoff) angelegt wird und der Katalysator A zur Teilmenge H-funktioneller Startersubstanz im ersten Schritt oder unmittelbar anschließend im zweiten Schritt zugesetzt wird.
Das resultierende Reaktionsgemisch wird dann bei einer Temperatur von 130°C bis 230°C, bevorzugt 140°C bis 200°C, besonders bevorzugt 160°C bis 190°C erhitzt, wobei gegebenenfalls ein Inertgas-Strom (beispielsweise von Argon oder Stickstoff) durch den Reaktor geleitet werden kann. Die Reaktion wird solange fortgeführt bis bei der eingestellten Temperatur keine Gasentwicklung mehr beobachtet wird. Das bei der Reaktion entstandene $CO_2$ kann weitergeleitet und in Schritt (iii) eingesetzt werden. Die Reaktion kann ebenfalls unter Druck durchgeführt werden, bevorzugt bei einem Druck von 50 mbar bis 100 bar (absolut), besonders bevorzugt 200 mbar bis 50 bar (absolut), insbesondere bevorzugt 500 mbar bis 30 bar (absolut).
Wurde nur eine Teilmenge an H-funktioneller Startersubstanz und/oder eine Teilmenge an cyclischem Carbonat in den Reaktor vorgelegt, erfolgt die Dosierung der restlichen Menge an H-funktioneller Startersubstanz und/oder cyclischen Carbonats in den Reaktor kontinuierlich. Es ist möglich, das cyclische Carbonat mit konstanter Dosierrate zu dosieren oder die Dosierrate allmählich oder schrittweise zu steigern oder zu senken oder das cyclische Carbonat portionsweise zuzugeben. Bevorzugt wird das cyclische Carbonat mit konstanter Dosierrate dem Reaktionsgemisch zugegeben. Die Dosierung des cyclischen Carbonats bzw. der H-funktionellen Startersubstanzen kann simultan oder sequentiell über jeweils separate Dosierungen (Zugaben) erfolgen oder über eine oder mehrere Dosierungen, wobei die H-funktionelle Startersubstanz einzeln oder als Gemisch dosiert werden kann.
Als cyclisches Carbonat wird bevorzugt Propylencarbonat, Ethylencarbonat oder eine Mischung aus Propylencarbonat und Ethylencarbonat eingesetzt.

Schritt (ii):

Anschließend an Schritt (i) kann der Katalysator A aus dem aus Schritt (i) erhaltenen Polyethercarbonatalkohol entfernt werden. Dies kann beispielsweise durch Lösung des aus Schritt (i) erhaltenen Polyethercarbonatalkohols in einem organischen Lösungsmittel und anschließender Extraktion mit Wasser oder einer Filtration des Katalysators A aus Schritt (i) als Feststoffpartikel geschehen. Bevorzugt wird der Katalysator aus Schritt (i) durch Extraktion mit Wasser entfernt.

Die Entfernung des Katalysators A in Schritt (ii) kann sowohl im gleichen wie auch in einem anderen Reaktor wie in Schritt (i) durchgeführt werden. Bevorzugt werden in Schritt (ii) zusätzlich zu dem Katalysator A auch niedermolekulare Verbindungen entfernt.

Der aus Schritt (ii) erhaltene Polyethercarbonatalkohol weist bevorzugt ein zahlenmittleres Molekulargewicht von 200 bis 1500 g/mol, besonders bevorzugt von 300 bis 1400 g/mol auf. Es ist ebenfalls bevorzugt, dass der aus Schritt (ii) erhaltene Polyethercarbonatalkohol 15 bis 40 Gew.-%, besonders bevorzugt von 20 bis 30 Gew.-% an eingebautem $CO_2$ aufweist.

Das zahlenmittlere Molekulargewicht wird gemäß DIN55672-1 bestimmt.

Schritt (iii):

Die Anlagerung von Alkylenoxid und Kohlendioxid in Gegenwart eines Katalysators B an den aus Schritt (i) oder (ii) erhaltenen Polyethercarbonatalkohol kann sowohl im selben Reaktor wie Schritt (i) und/oder Schritt (ii) oder in einem anderen Reaktor durchgeführt werden.

Das Verfahren gemäß Schritt (iii) kann beispielsweise derart durchgeführt werden, dass

($\alpha$) eine H-funktionelle Startersubstanz oder ein Gemisch aus mindestens zwei H-funktionellen Startersubstanzen oder ein Suspensionsmittel vorgelegt und gegebenenfalls Wasser und/oder andere leicht flüchtige Verbindungen durch erhöhte Temperatur und/oder reduziertem Druck entfernt werden ("Trocknung"), wobei der Katalysator B der H-funktionellen Startersubstanz oder dem Gemisch von mindestens zwei H-funktionellen Startersubstanzen oder dem Suspensionsmittel vor oder nach der Trocknung zugesetzt wird,

($\beta$) gegebenenfalls zur Aktivierung eines DMC-Katalysators eine Teilmenge (bezogen auf die Gesamtmenge der bei der Aktivierung und Copolymerisation eingesetzten Menge an Alkylenoxiden) von Alkylenoxid zu der aus Schritt ($\alpha$) resultierenden Mischung zugesetzt wird, wobei diese Zugabe einer Teilmenge an Alkylenoxid gegebenenfalls in Gegenwart von $CO_2$ erfolgen kann, und wobei dann die aufgrund der folgenden exothermen chemischen Reaktion auftretende Temperaturspitze ("Hotspot") und/oder ein Druckabfall im Reaktor jeweils abgewartet wird, und wobei der Schritt ($\beta$) zur Aktivierung auch mehrfach erfolgen kann,

($\gamma$) Alkylenoxid, Kohlendioxid und gegebenenfalls eine H-funktionelle Startersubstanz zu der aus Schritt ($\alpha$) oder gegebenenfalls Schritt ($\beta$) resultierenden Mischung zugesetzt werden,

wobei wenigstens in einem der Schritte ($\alpha$) oder ($\gamma$) der aus Schritt (i) oder (ii) erhaltene Polyethercarbonatalkohol zugesetzt wird.

Neben dem aus Schritt (i) oder (ii) erhaltenen Polyethercarbonatalkohol können auch weitere H-funktionelle Startersubstanzen eingesetzt werden.

Zu Schritt ($\alpha$):

Vorzugsweise wird in Schritt ($\alpha$) ein Suspensionsmittel, das keine H-funktionellen Gruppen enthält, im Reaktor gegebenenfalls gemeinsam mit Katalysator B vorgelegt, und dabei wird keine H-funktionelle Startersubstanz im Reaktor vorgelegt. Alternativ können auch in Schritt ($\alpha$) ein Suspensionsmittel, das keine H-funktionellen Gruppen enthält, und zusätzlich eine Teilmenge der H-funktionellen Startersubstanz sowie gegebenenfalls Katalysator B im Reaktor vorgelegt werden, oder es können auch in Schritt ($\alpha$) eine Teilmenge der H-funktionellen Startersubstanz sowie gegebenenfalls Katalysator B im Reaktor vorgelegt werden. Weiterhin können auch in Schritt ($\alpha$) die Gesamtmenge der H-funktionellen Startersubstanz sowie gegebenenfalls Katalysator B im Reaktor vorgelegt werden.

Die gegebenenfalls eingesetzten Suspensionsmittel enthalten keine H-funktionellen Gruppen und wirken deshalb nicht als H-funktionelle Startersubstanzen. Als Suspensionsmittel sind alle polar-aprotischen, schwach polar-aprotischen und unpolar-aprotischen Lösungsmittel geeignet, die jeweils keine H-funktionellen Gruppen enthalten. Als Suspensionsmittel kann auch eine Mischung aus zwei oder mehrerer dieser Suspensionsmittel eingesetzt werden. Beispielhaft seien an dieser Stelle folgende polar-aprotischen Suspensionsmittel genannt: 4-Methyl-2-oxo-1,3-dioxolan (im Folgenden auch als cyclisches Propylencarbonat oder cPC bezeichnet), 1,3-Dioxolan-2-on (im Folgenden auch als cyclisches Ethylencarbonat oder cEC bezeichnet), Aceton, Methylethylketon, Acetonitril, Nitromethan, Dimethylsulfoxid, Sulfolan, Dimethylformamid, Dimethylacetamid und N-Methylpyrrolidon. Zu der Gruppe der unpolar- und schwach polaraprotischen Suspensionsmittel zählen z.B. Ether, wie z.B. Dioxan, Diethylether, Methyl-tert-Butylether und Tetrahydrofuran, Ester, wie z.B. Essigsäureethylester und Essigsäurebutylester, Kohlenwasserstoffe, wie z.B. Pentan, n-Hexan, Benzol und alkylierte Benzolderivate (z.B. Toluol, Xylol, Ethylbenzol) und chlorierte Kohlenwasserstoffe, wie z.B., Chloroform, Chlorbenzol, Dichlorbenzol und Tetrachlorkohlenstoff. Bevorzugt als Suspensionsmittel werden 4-Methyl-2-oxo-1,3-dioxolan, 1,3-Dioxolan-2-on, Toluol, Xylol, Ethylbenzol, Chlorbenzol und Dichlorbenzol sowie Mischungen zweier oder mehrerer dieser Suspensionsmittel eingesetzt, besonders bevorzugt ist 4-Methyl-2-oxo-1,3-dioxolan und 1,3-Dioxolan-2-on oder eine Mischung aus 4-Methyl-2-oxo-1,3-dioxolan und 1,3-Dioxolan-2-on.

Der Katalysator B wird vorzugsweise in einer Menge eingesetzt, so dass der Gehalt an Katalysator B im gemäß Schritt (iii) resultierenden Reaktionsprodukt 10 bis 10000 ppm, besonders bevorzugt 20 bis 5000 ppm und höchst bevorzugt 50 bis 500 ppm beträgt.

In einer bevorzugten Ausführungsform wird in das resultierende Gemisch aus Katalysator B mit Suspensionsmittel und/oder H-funktioneller Startersubstanz bei einer Temperatur von 90 bis 150°C, besonders bevorzugt von 100 bis 140°C Inertgas (beispielsweise Argon oder Stickstoff), ein Inertgas-Kohlendioxid-Gemisch oder Kohlendioxid eingeleitet und gleichzeitig ein reduzierter Druck (absolut) von 10 mbar bis 800 mbar, besonders bevorzugt von 50 mbar bis 200 mbar angelegt.

In einer alternativen bevorzugten Ausführungsform wird das resultierende Gemisch aus Katalysator B mit Suspensionsmittel und/oder H-funktioneller Startersubstanz bei einer Temperatur von 90 bis 150°C, besonders bevorzugt von 100 bis 140°C mindestens einmal, vorzugsweise dreimal mit 1,5 bar bis 10 bar (absolut), besonders bevorzugt 3 bar bis 6 bar (absolut) eines Inertgases (beispielsweise Argon oder Stickstoff), eines Inertgas-Kohlendioxid-Gemisches oder Kohlendioxid beaufschlagt und jeweils anschließend der Überdruck auf ca. 1 bar (absolut) reduziert.

Der Katalysator B kann beispielsweise in fester Form oder als Suspension in einem Suspensionsmittel oder als Suspension in einer H-funktionellen Startersubstanz zugegeben werden.

In einer weiteren bevorzugten Ausführungsform wird in Schritt (α)

(α-I) Suspensionsmittel und/oder eine Teilmenge oder die Gesamtmenge an H-funktioneller Startersubstanz vorgelegt und

(α-II) die Temperatur des Suspensionsmittels und/oder der H-funktionellen Startersubstanz auf 50 bis 200°C, bevorzugt 80 bis 160°C, besonders bevorzugt 100 bis 140°C gebracht und/oder der Druck im Reaktor auf weniger als 500 mbar, bevorzugt 5 mbar bis 100 mbar erniedrigt, wobei gegebenenfalls ein Inertgas-Strom (beispielsweise von Argon oder Stickstoff), ein Inertgas-Kohlendioxid-Strom oder ein Kohlendioxid-Strom durch den Reaktor geleitet wird,

wobei der Katalysator B zum Suspensionsmittel und/oder zur H-funktionellen Startersubstanz in Schritt (α-I) oder unmittelbar anschließend in Schritt (α-II) zugesetzt wird, und
wobei das Suspensionsmittel keine H-funktionellen Gruppen enthält.

<u>Zu Schritt (β):</u>

Schritt (β) dient der Aktivierung des Katalysators B, falls dieser einen DMC-Katalysator enthalten sollte. Dieser Schritt kann gegebenenfalls unter Inertgasatmosphäre, unter einer Atmosphäre aus Inertgas-Kohlendioxid-Gemisch oder unter einer Kohlendioxid-Atmosphäre durchgeführt werden. Als Aktivierung im Sinne dieser Erfindung wird ein Schritt bezeichnet, bei dem eine Teilmenge Alkylenoxid bei Temperaturen von 90 bis 150°C zur DMC-Katalysator-Suspension zugegeben wird und dann die Zugabe des Alkylenoxids unterbrochen wird, wobei aufgrund einer folgenden exothermen chemischen Reaktion eine Wärmeentwicklung, die zu einer Temperaturspitze ("Hotspot") führen kann, sowie aufgrund der Umsetzung von Alkylenoxid und gegebenenfalls $CO_2$ ein Druckabfall im Reaktor beobachtet wird. Der Verfahrensschritt der Aktivierung ist die Zeitspanne von der Zugabe der Teilmenge an Alkylenoxid, gegebenenfalls in Gegenwart von $CO_2$, zum DMC-Katalysator bis zum Auftreten der Wärmeentwicklung. Gegebenenfalls kann die Teilmenge Alkylenoxid in mehreren Einzelschritten, gegebenenfalls in Gegenwart von $CO_2$, zum DMC-Katalysator gegeben werden und dann jeweils die Zugabe des Alkylenoxids unterbrochen werden. Im diesem Fall umfasst der Verfahrensschritt der Aktivierung die Zeitspanne von der Zugabe der ersten Teilmenge an Alkylenoxid, gegebenenfalls in Gegenwart von $CO_2$, zum DMC-Katalysator bis zum Auftreten der Wärmeentwicklung nach Zugabe der letzten Teilmenge an Alkylenoxid. Im Allgemeinen kann dem Aktivierungsschritt ein Schritt zum Trocknen des DMC-Katalysators und ggf. der H-funktionellen Startersubstanz bei erhöhter Temperatur und/oder reduziertem Druck, gegebenenfalls unter Durchleiten eines Inertgases durch die Reaktionsmischung, vorgelagert sein.

Die Dosierung eines oder mehrerer Alkylenoxide (und gegebenenfalls des Kohlendioxids) kann prinzipiell in unterschiedlicher Weise erfolgen. Der Start der Dosierung kann aus dem Vakuum heraus oder bei einem zuvor gewählten

Vordruck erfolgen. Der Vordruck wird bevorzugt durch Einleiten eines Inertgases (wie beispielsweise Stickstoff oder Argon) oder von Kohlendioxid eingestellt, wobei der Druck(absolut) 5 mbar bis 100 bar, vorzugsweise 10 mbar bis 50 bar und bevorzugt 20 mbar bis 50 bar beträgt.

In einer bevorzugten Ausführungsform beträgt die bei der Aktivierung in Schritt (β) eingesetzte Menge von einem oder mehreren Alkylenoxiden 0,1 bis 25,0 Gew.-%, bevorzugt 1,0 bis 20,0 Gew.-%, besonders bevorzugt 2,0 bis 16,0 Gew.-% (bezogen auf die im Schritt (α) eingesetzte Menge an Suspensionsmittel und/oder H-funktioneller Startersubstanz). Das Alkylenoxid kann in einem Schritt oder portionsweise in mehreren Teilmengen zugegeben werden. Bevorzugt wird nach Zugabe einer Teilmenge an Alkylenoxid die Zugabe des Alkylenoxids bis zum Auftreten der Wärmeentwicklung unterbrochen und erst dann die nächste Teilmenge an Alkylenoxid zugegeben. Bevorzugt ist auch eine zweistufige Aktivierung (Schritt β), wobei

(β1) in einer ersten Aktivierungsstufe die Zugabe einer ersten Teilmenge von Alkylenoxid unter Inertgasatmosphäre oder Kohlendioxid-Atmosphäre erfolgt und

(ß2) in einer zweiten Aktivierungsstufe die Zugabe einer zweiten Teilmenge von Alkylenoxid unter Kohlendioxid-Atmosphäre erfolgt.

Zu Schritt (γ):

Für das erfindungsgemäße Verfahren hat sich gezeigt, dass Schritt (γ) vorteilhafterweise bei 50 bis 150°C, bevorzugt bei 60 bis 145°C, besonders bevorzugt bei 70 bis 140°C und ganz besonders bevorzugt bei 90 bis 130°C durchgeführt wird. Unterhalb von 50°C läuft die Reaktion unter Bildung eines Polyethercarbonatalkohols nur sehr langsam ab. Bei Temperaturen oberhalb von 150°C steigt die Menge an unerwünschten Nebenprodukten stark an.

Die Dosierung eines oder mehrerer Alkylenoxide und des Kohlendioxids kann simultan, wechselweise oder sequentiell erfolgen, wobei die gesamte Kohlendioxidmenge auf einmal oder dosiert über die Reaktionszeit zugegeben werden kann. Es ist möglich, während der Zugabe des Alkylenoxids den $CO_2$-Druck allmählich oder schrittweise zu steigern oder zu senken oder gleich zu lassen. Vorzugsweise wird der Gesamtdruck während der Reaktion durch eine Nachdosierung an Kohlendioxid konstant gehalten. Die Dosierung eines oder mehrerer Alkylenoxide erfolgt simultan, wechselweise oder sequentiell zur Kohlendioxid Dosierung. Es ist möglich, das Alkylenoxid mit konstanter Dosierrate zu dosieren oder die Dosierrate allmählich oder schrittweise zu steigern oder zu senken oder das Alkylenoxid portionsweise zuzugeben. Bevorzugt wird das Alkylenoxid mit konstanter Dosierrate dem Reaktionsgemisch zugegeben. Werden mehrere Alkylenoxide zur Synthese der Polyethercarbonatalkohole eingesetzt, so können die Alkylenoxide einzeln oder als Gemisch dosiert werden. Die Dosierung der Alkylenoxide kann simultan, wechselweise oder sequentiell über jeweils separate Dosierungen (Zugaben) erfolgen oder über eine oder mehrere Dosierungen, wobei die Alkylenoxide einzeln oder als Gemisch dosiert werden können. Über die Art und/oder Reihenfolge der Dosierung der Alkylenoxide und/oder des Kohlendioxids ist es möglich, statistische, alternierende, blockartige oder gradientenartige Polyethercarbonatalkohole zu synthetisieren.

Vorzugsweise wird ein Überschuss an Kohlendioxid bezogen auf die berechnete Menge an eingebautem Kohlendioxid im Polyethercarbonatalkohol eingesetzt, da bedingt durch die Reaktionsträgheit von Kohlendioxid ein Überschuss von Kohlendioxid von Vorteil ist. Die Menge an Kohlendioxid kann über den Gesamtdruck bei den jeweiligen Reaktionsbedingungen festgelegt werden. Als Gesamtdruck (absolut) hat sich der Bereich von 0,01 bis 120 bar, bevorzugt 0,1 bis 110 bar, besonders bevorzugt von 1 bis 100 bar für die Copolymerisation zur Herstellung der Polyethercarbonatalkohole als vorteilhaft erwiesen. Es ist möglich, das Kohlendioxid kontinuierlich oder diskontinuierlich zuzuführen. Dies hängt davon ab, wie schnell die Alkylenoxide und das $CO_2$ verbraucht werden und ob das Produkt gegebenenfalls $CO_2$-freie Polyether-Blöcke oder Blöcke mit unterschiedlichem $CO_2$-Gehalt enthalten soll. Die Menge des Kohlendioxids (angegeben als Druck) kann bei der Zugabe der Alkylenoxide ebenso variieren. Je nach den gewählten Reaktionsbedingungen ist es möglich, das $CO_2$ im gasförmigen, flüssigen oder überkritischen Zustand in den Reaktor einzuleiten. $CO_2$ kann auch als Feststoff in den Reaktor gegeben werden und dann unter den gewählten Reaktionsbedingungen in den gasförmigen, gelösten, flüssigen und/oder überkritischen Zustand übergehen.

Bei einem Verfahren mit Dosierung der H-funktionellen Startersubstanz in Schritt (γ) kann die Dosierung der H-funktionellen Startersubstanz, des Alkylenoxids und gegebenenfalls auch des Kohlendioxids simultan oder sequentiell (portionsweise) erfolgen, beispielsweise kann die gesamte Kohlendioxidmenge, die Menge an H-funktioneller Startersubstanz und/oder die in Schritt (γ) dosierte Menge an Alkylenoxid auf einmal oder kontinuierlich zugegeben werden. Der hier verwendete Begriff "kontinuierlich" kann als Modus der Zugabe eines Reaktanden so definiert werden, dass eine für die Copolymerisation wirksame Konzentration des Reaktanden aufrechterhalten wird, d.h. beispielsweise kann die Dosierung mit einer konstanten Dosierrate, mit einer variierenden Dosierrate oder portionsweise erfolgen.

Es ist möglich, während der Zugabe des Alkylenoxids und/oder der H-funktionellen Startersubstanz den $CO_2$-Druck allmählich oder schrittweise zu steigern oder zu senken oder gleich zu lassen. Vorzugsweise wird der Gesamtdruck während der Reaktion durch eine Nachdosierung an Kohlendioxid konstant gehalten. Die Dosierung des

Alkylenoxids und/oder der H-funktionellen Startersubstanz erfolgt simultan oder sequentiell zur Kohlendioxid-Dosierung. Es ist möglich, das Alkylenoxid mit konstanter Dosierrate zu dosieren oder die Dosierrate allmählich oder schrittweise zu steigern oder zu senken oder das Alkylenoxid portionsweise zuzugeben. Bevorzugt wird das Alkylenoxid mit konstanter Dosierrate dem Reaktionsgemisch zugegeben. Werden mehrere Alkylenoxide zur Synthese der Polyethercarbonatalkohole eingesetzt, so können die Alkylenoxide einzeln oder als Gemisch dosiert werden. Die Dosierung der Alkylenoxide bzw. der H-funktionellen Startersubstanzen kann simultan oder sequentiell über jeweils separate Dosierungen (Zugaben) erfolgen oder über eine oder mehrere Dosierungen, wobei die Alkylenoxide bzw. die H-funktionellen Startersubstanzen einzeln oder als Gemisch dosiert werden können. Über die Art und/oder Reihenfolge der Dosierung der H-funktionellen Startersubstanzen, der Alkylenoxide und/oder des Kohlendioxids ist es möglich, statistische, alternierende, blockartige oder gradientenartige Polyethercarbonatalkohole zu synthetisieren.

In einer bevorzugten Ausführungsform wird in Schritt ($\gamma$) die Dosierung der H-funktionellen Startersubstanz zeitlich vor der Zugabe des Alkylenoxids beendet.

Eine bevorzugte Ausführungsform des erfindungsgemäßen Verfahrens ist unter anderem dadurch gekennzeichnet, dass in Schritt ($\gamma$) die Gesamtmenge der H-funktionellen Startersubstanz zugegeben wird, also in Schritt ($\alpha$) ein Suspensionsmittel eingesetzt wird. Diese Zugabe kann mit einer konstanten Dosierrate, mit einer variierenden Dosierrate oder portionsweise erfolgen.

Bevorzugt werden die Polyethercarbonatalkohole in einem kontinuierlichen Verfahren hergestellt, das sowohl eine kontinuierliche Copolymerisation als auch eine kontinuierliche Zugabe der H-funktionellen Startersubstanz umfasst. Gegenstand der Erfindung ist daher auch ein Verfahren, wobei in Schritt ($\gamma$) H-funktionelle Startersubstanz, wobei die H-funktionelle Startersubstanz mindestens den Polyethercarbonatalkohol aus Schritt (i) oder (ii) enthält, Alkylenoxid sowie Katalysator B in Gegenwart von Kohlendioxid ("Copolymerisation") kontinuierlich in den Reaktor dosiert werden und wobei das resultierende Reaktionsgemisch (enthaltend das Reaktionsprodukt) kontinuierlich aus dem Reaktor entfernt wird. Vorzugsweise wird dabei in Schritt ($\gamma$) der Katalysator B, welcher in H-funktioneller Startersubstanz suspendiert wurde, kontinuierlich zugegeben. Die Dosierung des Alkylenoxids, der H-funktionellen Startersubstanz und des Katalysators B kann über separate oder gemeinsame Dosierstellen erfolgen. In einer bevorzugten Ausführungsform werden das Alkylenoxid und die H-funktionelle Startersubstanz über separate Dosierstellen kontinuierlich dem Reaktionsgemisch zugeführt. Diese Zugabe der H-funktionellen Startersubstanz kann als kontinuierliche Zudosierung in den Reaktor oder portionsweise erfolgen.

Beispielsweise wird für das kontinuierliche Verfahren zur Herstellung der Polyethercarbonatalkohole gemäß den Schritten ($\alpha$) und ($\beta$) eine aktivierte DMC-Katalysator-Suspensionsmittel-Mischung hergestellt, dann werden gemäß Schritt ($\gamma$)

($\gamma$1) jeweils eine Teilmenge an H-funktioneller Startersubstanz, Alkylenoxid und Kohlendioxid zudosiert zum Initiieren der Copolymerisation, und

($\gamma$2) während des Fortschreitens der Copolymerisation jeweils die verbleibende Menge an DMC-Katalysator, H-funktioneller Startersubstanz und Alkylenoxid in Gegenwart von Kohlendioxid kontinuierlich zudosiert, wobei gleichzeitig resultierendes Reaktionsgemisch kontinuierlich aus dem Reaktor entfernt wird,

wobei die H-funktionelle Startersubstanz den aus Schritt (i) oder (ii) erhaltenen Polyethercarbonatalkohol enthält.

In Schritt ($\gamma$) wird der Katalysator B bevorzugt suspendiert in der H-funktionellen Startersubstanz zugegeben.

Die Schritte ($\alpha$), ($\beta$) und ($\gamma$) können in demselben Reaktor oder jeweils separat in unterschiedlichen Reaktoren durchgeführt werden. Besonders bevorzugte Reaktortypen sind: Rohrreaktoren, Rührkessel, Schlaufenreaktoren.

Die Schritte ($\alpha$), ($\beta$) und ($\gamma$) können in einem Rührkessel durchgeführt werden, wobei der Rührkessel je nach Ausführungsform und Betriebsweise über den Reaktormantel, innen liegende und/oder in einem Umpumpkreislauf befindliche Kühlflächen gekühlt wird. Sowohl im Semibatch-Verfahren, bei dem das Produkt erst nach Ende der Reaktion entnommen wird, als auch im kontinuierlichen Verfahren, bei dem das Produkt kontinuierlich entnommen wird, ist besonders auf die Dosiergeschwindigkeit des Alkylenoxids zu achten. Sie ist so einzustellen, dass trotz der inhibierenden Wirkung des Kohlendioxids die Alkylenoxide genügend schnell abreagieren.

In einer bevorzugten Ausführungsform wird die gemäß den Schritten ($\alpha$) und ($\beta$) resultierende aktivierte DMC-Katalysator enthaltende Mischung in demselben Reaktor weiter mit Alkylenoxid, H-funktioneller Startersubstanz und Kohlendioxid umgesetzt. In einer weiteren bevorzugten Ausführungsform wird die gemäß den Schritten ($\alpha$) und ($\beta$) resultierende aktivierte DMC-Katalysator enthaltende Mischung in einem anderen Reaktionsbehältnis (beispielsweise einem Rührkessel, Rohrreaktor oder Schlaufenreaktor) weiter mit Alkylenoxid, H-funktioneller Startersubstanz und Kohlendioxid umgesetzt.

Bei Reaktionsführung in einem Rohrreaktor wird die gemäß den Schritten ($\alpha$) und ($\beta$) resultierende aktivierte DMC-Katalysator enthaltende Mischung, H-funktionelle Startersubstanz, Alkylenoxid und Kohlendioxid kontinuierlich durch ein Rohr gepumpt. Die molaren Verhältnisse der Reaktionspartner variieren je nach gewünschtem Polymer. In einer bevorzugten Ausführungsform wird hierbei Kohlendioxid in seiner flüssigen oder überkritischen Form zudosiert,

um eine optimale Mischbarkeit der Komponenten zu ermöglichen. Vorteilhafterweise werden Mischelemente zur besseren Durchmischung der Reaktionspartner eingebaut, wie sie zum Beispiel von der Firma Ehrfeld Mikrotechnik BTS GmbH vertrieben werden, oder Mischer-Wärmetauscherelemente, die gleichzeitig die Durchmischung und Wärmeabfuhr verbessern.

Schlaufenreaktoren können ebenfalls zur Durchführung der Schritte (α), (β) und (γ) verwendet werden. Hierunter fallen im Allgemeinen Reaktoren mit Stoffrückführung, wie beispielsweise ein Strahlschlaufenreaktor, der auch kontinuierlich betrieben werden kann, oder ein schlaufenförmig ausgelegter Rohrreaktor mit geeigneten Vorrichtungen für die Umwälzung der Reaktionsmischung oder eine Schlaufe von mehreren hintereinander geschalteten Rohrreaktoren. Der Einsatz eines Schlaufenreaktors ist insbesondere deshalb von Vorteil, weil hier eine besonders gute Rückvermischung realisiert werden kann, so dass die Konzentration an freien Alkylenoxiden in der Reaktionsmischung im optimalen Bereich, vorzugsweise im Bereich > 0 bis 40 Gew.-%, besonders bevorzugt > 0 bis 25 Gew.-%, höchst bevorzugt > 0 bis 15 Gew.-% (jeweils bezogen auf das Gewicht der Reaktionsmischung) gehalten werden kann.

Vorzugsweise werden die Schritte (α) und (β) in einem ersten Reaktor durchgeführt, und das resultierende Reaktionsgemisch dann in einen zweiten Reaktor für die Copolymerisation gemäß Schritt (γ) überführt. Es ist aber auch möglich, die Schritte (α), (β) und (γ) in einem Reaktor durchzuführen.

Der hier verwendete Begriff "kontinuierlich" kann als Modus der Zugabe eines relevanten Katalysators B oder Reaktanden so definiert werden, dass eine im Wesentlichen kontinuierliche wirksame Konzentration des Katalysators B oder des Reaktanden aufrechterhalten wird. Die Zufuhr des Katalysators B kann echt kontinuierlich oder in relativ eng beabstandeten Inkrementen erfolgen. Gleichermaßen kann eine kontinuierliche Starterzugabe echt kontinuierlich sein oder in Inkrementen erfolgen. Es würde nicht vom vorliegenden Verfahren abweichen, einen Katalysator B oder Reaktanden inkrementell so zuzugeben, dass die Konzentration der zugegebenen Materialien für einige Zeit vor der nächsten inkrementellen Zugabe im Wesentlichen auf null abfällt. Es ist jedoch bevorzugt, dass die Konzentration des Katalysators B während des Hauptteils des Verlaufs der kontinuierlichen Reaktion im Wesentlichen auf derselben Konzentration gehalten wird und dass Startersubstanz während des Hauptteils des Copolymerisations-Verfahrens vorhanden ist. Eine inkrementelle Zugabe von Katalysator B und/oder Reaktant, die die Beschaffenheit des Produkts nicht wesentlich beeinflusst, ist in demjenigen Sinn, in dem der Begriff hier verwendet wird, dennoch "kontinuierlich". Es ist beispielsweise machbar, eine Rückführungsschleife bereitzustellen, in der ein Teil der reagierenden Mischung zu einem vorherigen Punkt im Verfahren zurückgeführt wird, wodurch durch inkrementelle Zugaben bewirkte Diskontinuitäten geglättet werden.

Die erfindungsgemäß aus Schritt (iii) erhaltenen Polyethercarbonatalkohole haben beispielsweise eine Funktionalität von mindestens 1, bevorzugt von 1 bis 8, besonders bevorzugt von 1 bis 6 und ganz besonders bevorzugt von 2 bis 4. Das Molekulargewicht beträgt bevorzugt 400 bis 10000 g/mol und besonders bevorzugt 500 bis 6000 g/mol.

In dem aus Schritt (iii) resultierenden Polyethercarbonatalkohol kann bei einer Temperatur von 80°C bis 200 °C thermisch der Gehalt an leicht flüchtigen Bestandteilen reduziert werden.

Zur thermischen Reduktion der flüchtigen Bestandteile können die dem Fachmann aus dem Stand der Technik allgemein bekannten Methoden eingesetzt werden. Beispielsweise kann die thermische Reduktion der flüchtigen Bestandteile mittels Dünnschichtverdampfung, Kurzwegverdampfung oder Fallfimverdampfung erreicht werden, wobei dies bevorzugt unter vermindertem Druck (Vakuum) erfolgt. Daneben können auch klassische Destillationsverfahren zum Einsatz kommen, bei denen der Polyethercarbonatalkohol z.B. in einem Kolben oder Rührkessel auf eine Temperatur von 80 bis 200°C erhitzt wird, und die leicht flüchtigen Bestandteile über Kopf abdestilliert werden. Zur Steigerung der Effizienz der Destillation kann dabei sowohl unter vermindertem Druck und/oder Einsatz eines inerten Strippgases (z.B. Stickstoff) und/oder Einsatz eines Schleppmittels (z.B. Wasser oder inertes organisches Lösungsmittel) gearbeitet werden. Daneben kann die Reduktion der flüchtigen Bestandteile auch durch Vakuum-Strippen in einer Packungskolonne erfolgen, wobei als Strippgas üblicherweise Wasserdampf oder Stickstoff zum Einsatz kommen. Es ist ebenfalls möglich, gegebenenfalls in Schritt (iii) gebildetes cyclisches Carbonat von dem aus Schritt (iii) resultierenden Polyethercarbonatalkohol abzutrennen und in Schritt (i) zurückzuführen.

<u>Alkylenoxid</u>

Allgemein können für das erfindungsgemäße Verfahren Alkylenoxide (Epoxide) mit 2-24 Kohlenstoffatomen eingesetzt werden. Bei den Alkylenoxiden mit 2-24 Kohlenstoffatomen handelt es sich beispielsweise um eine oder mehrere Verbindungen ausgewählt aus der Gruppe bestehend aus Ethylenoxid, Propylenoxid, 1-Butenoxid, 2,3-Butenoxid, 2-Methyl-1,2-propenoxid (Isobutenoxid), 1-Pentenoxid, 2,3-Pentenoxid, 2-Methyl-1,2-butenoxid, 3-Methyl-1,2-butenoxid, 1-Hexenoxid, 2,3-Hexenoxid, 3,4-Hexenoxid, 2-Methyl-1,2-pentenoxid, 4-Methyl-1,2-pentenoxid, 2-Ethyl-1,2-butenoxid, 1-Heptenoxid, 1-Octenoxid, 1-Nonenoxid, 1-Decenoxid, 1-Undecenoxid, 1-Dodecenoxid, 4-Methyl-1,2-pentenoxid, Butadienmonoxid, Isoprenmonoxid, Cyclopentenoxid, Cyclohexenoxid, Cycloheptenoxid, Cyclooctenoxid, Styroloxid, Methylstyroloxid, Pinenoxid, ein-oder mehrfach epoxidierte Fette als Mono-, Di- und Triglyceride, epoxidierte Fettsäuren, C1-C24-Ester von epoxidierten Fettsäuren, Epichlorhydrin, Glycidol, und Derivate des Glycidols wie beispielsweise Methylglycidylether, Ethylglycidylether, 2-Ethylhexylglycidylether, Allylglycidylether, Glycidylmethacrylat sowie epoxidfunktionelle Alkyoxysilane wie beispielsweise 3-Glycidyloxypropyltrimethoxysilan, 3-Glycidyloxypropyltriethoxysilan, 3-Glycidyloxypropyltripropoxysilan, 3 -Glycidyloxypropyl-methyl-dimethoxysilan, 3 -Glycidyloxypropyl-ethyldiethoxysilan, 3-Glycidyloxypropyltriisopropoxysilan. Vorzugsweise werden als Alkylenoxide 1-Butenoxid, Ethylenoxid und/oder Propylenoxid, besonders bevorzugt Ethylenoxid und/oder Propylenoxid, insbesondere bevorzugt nur Propylenoxid.

H-funktionelle Startersubstanz

Als geeignete H-funktionelle Startersubstanz ("Starter") können Verbindungen mit für die Alkoxylierung aktiven H-Atomen eingesetzt werden, die ein zahlenmittleres Molekulargewicht gemäß DIN55672-1 bis 10000 g/mol, bevorzugt bis 5000 g/mol und besonders bevorzugt bis 2500 g/mol aufweisen. Bevorzugt werden in Schritt (i) als H-funktionelle Startersubstanz Verbindungen eingesetzt, die ein zahlenmittleres Molekulargewicht von 18 bis 1000 g/mol, besonders bevorzugt 62 bis 600 g/mol, insbesondere 62 bis 300 g/mol aufweisen.

Für die Alkoxylierung aktive Gruppen mit aktiven H-Atomen sind beispielsweise -OH, $-NH_2$ (primäre Amine), -NH- (sekundäre Amine), -SH und $-CO_2H$, bevorzugt sind -OH, $-NH_2$ und - $CO_2H$, besonders bevorzugt ist -OH. Als H-funktionelle Startersubstanz wird beispielsweise eine oder mehrere Verbindungen ausgewählt aus der Gruppe bestehend aus ein- oder mehrwertigen Alkoholen, mehrwertigen Aminen, mehrwertigen Thiolen, Aminoalkohole, Thioalkohole, Hydroxyester, Polyetherpolyole, Polyesterpolyole, Polyesteretherpolyole, Polyethercarbonatpolyole, Polycarbonatpolyole, Polycarbonate, Polyethylenimine, Polyetheramine, Polytetrahydrofurane (z. B. PolyTHF® der BASF), Polytetrahydrofuranamine, Polyetherthiole, Polyacrylatpolyole, Ricinusöl, das Mono- oder Diglycerid von Ricinolsäure, Monoglyceride von Fettsäuren, chemisch modifizierte Mono-, Di- und/oder Triglyceride von Fettsäuren, und $C_1$-$C_{24}$ Alkyl-Fettsäureester, die im Mittel mindestens 2 OH-Gruppen pro Molekül enthalten und Wasser, eingesetzt. Beispielhaft handelt es sich bei den $C_1$-$C_{24}$ Alkyl-Fettsäureester, die im Mittel mindestens 2 OH-Gruppen pro Molekül enthalten, um Handelsprodukte wie Lupranol Balance® (Fa. BASF AG), Merginol®-Typen (Fa. Hobum Oleochemicals GmbH), Sovermol®-Typen (Fa. Cognis Deutschland GmbH & Co. KG) und Soyol®TM-Typen (Fa. USSC Co.).

Als monofunktionelle Startersubstanz können Alkohole, Amine, Thiole und Carbonsäuren eingesetzt werden. Als monofunktionelle Alkohole können Verwendung finden: Methanol, Ethanol, 1-Propanol, 2-Propanol, 1-Butanol, 2-Butanol, tert-Butanol, 3-Buten-1-ol, 3-Butin-1-ol, 2-Methyl-3-buten-2-ol, 2-Methyl-3-butin-2-ol, Propagylalkohol, 2-Methyl-2-propanol, 1-tert-Butoxy-2-propanol, 1-Pentanol, 2-Pentanol, 3-Pentanol, 1-Hexanol, 2-Hexanol, 3-Hexanol, 1-Heptanol, 2-Heptanol, 3-Heptanol, 1-Octanol, 2-Octanol, 3-Octanol, 4-Octanol, Dodecanol, Tetradecanol, Hexadecanol, Octadecanol, Eicosanol, Phenol, 2-Hydroxybiphenyl, 3-Hydroxybiphenyl, 4-Hydroxybiphenyl, 2-Hydroxypyridin, 3-Hydroxypyridin, 4-Hydroxypyridin. Als monofunktionelle Amine kommen in Frage: Butylamin, tert-Butylamin, Pentylamin, Hexylamin, Anilin, Aziridin, Pyrrolidin, Piperidin, Morpholin. Als monofunktionelle Thiole können verwendet werden: Ethanthiol, 1-Propanthiol, 2-Propanthiol, 1-Butanthiol, 3-Methyl-1-butanthiol, 2-Buten-1-thiol, Thiophenol. Als Carbonsäuren seien genannt: Ameisensäure, Essigsäure, Propionsäure, Buttersäure, Acrylsäure, Oxalsäure, Malonsäure, Bernsteinsäure, Glutarsäure, Adipinsäure, Pimelinsäure, aromatische Carbonsäuren wie Benzoesäure, Terephthalsäure, Tetrahydrophthalsäure, Phthalsäure oder Isophthalsäure, Fettsäuren wie Stearinsäure, Palmitinsäure, Ölsäure, Linolsäure oder Linolensäure.

Als H-funktionelle Startersubstanz geeignete mehrwertige Alkohole sind beispielsweise zweiwertige Alkohole (wie beispielsweise Ethylenglykol, Diethylenglykol, Propylenglykol, Dipropylenglykol, 1,3-Propandiol, 1,4-Butandiol, 1,4-Butendiol, 1,4-Butindiol, Neopentylglykol, 1,5-Pentandiol, Methylpentandiole (wie beispielweise 3-Methyl-1,5-pentandiol), 1,6-Hexandiol, 1,8-Octandiol, 1,10-Decandiol, 1,12-Dodecandiol, Bis-(hydroxymethyl)-cyclohexane (wie beispielweise 1,4-Bis-(hydroxymethyl)cyclohexan), Triethylenglykol, Tetraethylenglykol, Polyethylenglykole, Dipropylenglykol, Tripropylenglykol, Polypropylenglykole, Dibutylenglykol und Polybutylenglykole); dreiwertige Alkohole (wie beispielsweise Trimethylolpropan, Glycerin, Trishydroxyethylisocyanurat, Rizinusöl); vierwertige Alkohole (wie beispielsweise Pentaerythrit); Polyalkohole (wie beispielsweise Sorbit, Hexit, Saccharose, Stärke, Stärkehydrolysate, Cellulose, Cellulosehydrolysate, hydroxyfunktionalisierte Fette und Öle, insbesondere Rizinusöl), sowie alle Modifizierungsprodukte dieser zuvorgenannten Alkohole mit unterschiedlichen Mengen an $\varepsilon$-Caprolacton.

Die H-funktionelle Startersubstanz kann auch aus der Substanzklasse der Polyetherpolyole ausgewählt sein, die ein Molekulargewicht $M_n$ gemäß DIN55672-1 im Bereich von 18 bis 8000 g/mol und eine Funktionalität von 2 bis 3 aufweisen. Bevorzugt sind Polyetherpolyole, die aus sich wiederholenden Ethylenoxid- und Propylenoxideinheiten aufgebaut sind, bevorzugt mit einem Anteil von 35 bis 100% Propylenoxideinheiten, besonders bevorzugt mit einem Anteil von 50 bis 100% Propylenoxideinheiten. Hierbei kann es sich um statistische Copolymere, Gradienten-Copolymere, alternierende oder Blockcopolymere aus Ethylenoxid und Propylenoxid handeln.

Die H-funktionelle Startersubstanz kann auch aus der Substanzklasse der Polyesterpolyole ausgewählt sein. Als Polyesterpolyole werden mindestens difunktionelle Polyester eingesetzt. Bevorzugt bestehen Polyesterpolyole aus alternierenden Säure- und Alkoholeinheiten. Als Säurekomponenten werden z.B. Bernsteinsäure, Maleinsäure, Maleinsäureanhydrid, Adipinsäure, Phthalsäureanhydrid, Phthalsäure, Isophthalsäure, Terephthalsäure, Tetrahydrophtalsäure, Tetrahydrophthalsäureanhydrid, Hexahydrophthalsäureanhydrid oder Gemische aus den genannten Säuren und/oder Anhydriden eingesetzt. Als Alkoholkomponenten werden z. B. Ethandiol, 1,2-Propandiol, 1,3-Propandiol, 1,4-Butandiol, 1,5-Pentandiol, Neopentylglykol, 1,6-Hexandiol, 1,4-Bis-(hydroxymethyl)-cyclohexan, Diethylenglykol, Dipropylenglykol, Trimethylolpropan, Glycerin, Pentaerythrit oder Gemische aus den genannten Alkoholen verwendet. Werden als Alkoholkomponente zweiwertige oder mehrwertige Polyetherpolyole eingesetzt, so erhält man Polyesteretherpolyole, die ebenfalls als Startersubstanzen zur Herstellung der Polyethercarbonatalkohole dienen können.
Des Weiteren können als H-funktionelle Startersubstanz Polycarbonatdiole eingesetzt werden, die beispielsweise durch Umsetzung von Phosgen, Dimethylcarbonat, Diethylcarbonat oder Diphenylcarbonat und difunktionellen Alkoholen oder Polyesterpolyolen oder Polyetherpolyolen hergestellt werden.
In einer weiteren Ausführungsform der Erfindung können Polyethercarbonatpolyole als H-funktionelle Startersubstanz eingesetzt werden. Insbesondere werden Polyethercarbonatpolyole, die nach dem hier beschriebenen erfindungsgemäßen Verfahren erhältlich sind, eingesetzt. Diese als H-funktionelle Startersubstanz eingesetzten Polyethercarbonatpolyole werden hierzu in einem separaten Reaktionsschritt zuvor hergestellt.
Die H-funktionelle Startersubstanz weist im Allgemeinen eine Funktionalität (d.h. Anzahl an für die Polymerisation aktiven H-Atomen pro Molekül) von 1 bis 8, bevorzugt von 1 bis 3 auf. Die H-funktionelle Startersubstanz wird entweder einzeln oder als Gemisch aus mindestens zwei H-funktionellen Startersubstanzen eingesetzt.
Besonders bevorzugt handelt es sich bei der H-funktionellen Startersubstanz um mindestens eine Verbindungen ausgewählt aus der Gruppe bestehend aus Wasser, Ethylenglykol, Propylenglykol, 1,3-Propandiol, 1,3-Butandiol, 1,4-Butandiol, 1,5-Pentandiol, 2-Methylpropan-1,3-diol, Neopentylglykol, 1,6-Hexandiol, 1,8-Octandiol, Diethylenglykol, Dipropylenglykol, Glycerin, Trimethylolpropan, Pentaerythrit, Sorbitol, Polyethercarbonatpolyole mit einem Molekulargewicht $M_n$ gemäß DIN55672-1 im Bereich von 150 bis 8000 g/mol bei einer Funktionalität von 2 bis 3 und Polyetherpolyole mit einem Molekulargewicht $M_n$ gemäß DIN55672-1 im Bereich von 150 bis 8000 g/mol und einer Funktionalität von 2 bis 3. Bevorzugt wird die H-funktionelle Startersubstanz in Schritt (i) so gewählt, dass als Polyethercarbonatalkohol ein Polyethercarbonatpolyol, d.h. ein Polyethercarbonatalkohol mit einer Funktionalität von 2 oder mehr, erhalten wird.
Insbesondere bevorzugt wird als H-funktionelle Startersubstanz in Schritt (i) mindestens eine Verbindung der Gruppe bestehend aus Wasser, Ethylenglykol, Propylenglykol, 1,3-Butandiol, 1,4-Butandiol, 1,5-Pentandiol, 2-Methylpropan-1,3-diol, Neopentylglykol, 1,6-Hexandiol, 1,8-Octandiol, Diethylenglykol, Dipropylenglykol, Glycerin, Trimethylolpropan, Pentaerythrit und Sorbitol eingesetzt.

Katalysatoren

Als geeigneter Katalysator A für die Reaktion von cyclischem Carbonat mit einer H-funktionellen Starterverbindung können in Schritt (i) beispielsweise Alkalimetall- und Erdalkalimetallsalze von organischen Verbindungen, wie Carbonate, Acetate oder Salze von Fettsäuren, Alkalihydroxide, wie Natriumhydroxid, Titan-Verbindungen, wie Titandioxid oder Titantetrabutylat, ZinnVerbindungen, wie Zinndioxid oder Dibutylzinnoxid, Molybdate, wie $Na_2MoO_4$, Wolframate, wie $Na_2WO_4$, Vanadate, wie $KVO_3$ oder $K_3VO_4$ und Phosphate, wie $K_3PO_4$, eingesetzt werden. Als Katalysator A werden bevorzugt tribasische Alkaliphosphate, Alkalicarboxylate, Alkaliacetate und Verbindungen der Formel (II)

MnX (II),

wobei

M ausgewählt ist aus den Alkalimetallkationen Li+, Na+, K+ und Cs+,

X ausgewählt ist aus den Anionen $VO_3^-$, $WO_4^{2-}$, $M0O_4^{2-}$ und $VO_4^{3-}$,

n ist 1, wenn $X = VO_3^-$,

n ist 2, wenn $X = WO_4^{2-}$ oder $MoO_4^{2-}$

n ist 3, wenn $X = VO_4^{3-}$,

eingesetzt. Es ist besonders bevorzugt, wenn der Katalysator A in Kombination mit einem Kronenether eingesetzt wird.

Für die Erfindung eingesetzte Katalysatoren A sind bevorzugt $Na_3PO_4$, $K_3PO_4$, $Li_2WO_4$. $Na_2WO_4$, $K_2WO_4$, $Cs_2WO_4$, $Li_2MoO_4$, $Na_2MoO_4$, $K_2MoO_4$, $Cs_2MoO_4$, $Li_3VO_4$, $Na_3VO_4$, $K_3VO_4$, $Cs_3VO_4$, $LiVO_3$, $NaVO_3$, $KVO_3$ und $CsVO_3$, besonders

bevorzugt $Na_3PO_4$, $K_3PO_4$, $Na_3VO_4$, $K_3VO_4$, $Cs_3VO_4$, $NaVO_3$, $KVO_3$ und $CsVO_3$.

Ein für die Anlagerung von $CO_2$ und Alkylenoxid geeigneter Katalysator B ist beispielsweise ein DMC-Katalysator oder ein Metallkomplexkatalysator auf Basis der Metalle Zink und/oder Cobalt, bevorzugt wird ein DMC-Katalysator eingesetzt.

DMC-Katalysatoren zur Verwendung in der Homopolymerisation von Alkylenoxiden sind im Prinzip aus dem Stand der Technik bekannt (siehe z.B. US-A 3 404 109, US-A 3 829 505, US-A 3 941 849 und US-A 5 158 922). DMC-Katalysatoren, die z.B. in US-A 5 470 813, EP-A 700 949, EP-A 743 093, EP-A 761 708, WO 97/40086, WO 98/16310 und WO 00/47649 beschrieben sind, besitzen eine sehr hohe Aktivität und ermöglichen die Herstellung von Polyethercarbonatpolyolen bei sehr geringen Katalysatorkonzentrationen, so dass eine Abtrennung des Katalysators aus dem fertigen Produkt i.a. nicht mehr erforderlich ist. Ein typisches Beispiel sind die in EP-A 700 949 beschriebenen hochaktiven DMC-Katalysatoren, die neben einer Doppelmetallcyanid-Verbindung (z.B. Zinkhexacyanocobaltat(III)) und einem organischen Komplexliganden (z.B. tert.-Butanol) noch einen Polyether mit einem zahlenmittlerem Molekulargewicht größer als 500 g/mol enthalten.

Die DMC-Katalysatoren werden vorzugsweise erhalten, indem man

(i) im ersten Schritt eine wässrige Lösung eines Metallsalzes mit der wässrigen Lösung eines Metallcyanidsalzes in Gegenwart eines oder mehrerer organischen Komplexliganden, z.B. eines Ethers oder Alkohols, umsetzt,
(ii) wobei im zweiten Schritt der Feststoff aus der aus (i) erhaltenen Suspension durch bekannte Techniken (wie Zentrifugation oder Filtration) abgetrennt wird,
(iii) wobei gegebenenfalls in einem dritten Schritt der isolierte Feststoff mit einer wässrigen Lösung eines organischen Komplexliganden gewaschen wird (z.B. durch Resuspendieren und anschließende erneute Isolierung durch Filtration oder Zentrifugation),
(iv) wobei anschließend der erhaltene Feststoff, gegebenenfalls nach Pulverisierung, bei Temperaturen von im allgemeinen 20 - 120°C und bei Drücken von im Allgemeinen 0,1 mbar bis Normaldruck (1013 mbar) getrocknet wird,

und wobei im ersten Schritt oder unmittelbar nach der Ausfällung der Doppelmetallcyanidverbindung (zweiter Schritt) ein oder mehrere organische Komplexliganden, vorzugsweise im Überschuss (bezogen auf die Doppelmetallcyanidverbindung) und gegebenenfalls weitere komplexbildende Komponenten zugesetzt werden.

Die in den DMC-Katalysatoren enthaltenen Doppelmetallcyanid-Verbindungen sind die Reaktionsprodukte wasserlöslicher Metallsalze und wasserlöslicher Metallcyanidsalze.

Beispielsweise werden eine wässrige Lösung von Zinkchlorid (bevorzugt im Überschuss bezogen auf das Metallcyanidsalz wie beispielsweise Kaliumhexacyanocobaltat) und Kaliumhexacyanocobaltat gemischt und anschließend Dimethoxyethan (Glyme) oder *tert*-Butanol (vorzugsweise im Überschuss, bezogen auf Zinkhexacyanocobaltat) zur gebildeten Suspension gegeben.

Zur Herstellung der Doppelmetallcyanid-Verbindungen geeignete Metallsalze besitzen bevorzugt die allgemeine Formel (III),

$$M(X)_n \qquad (III)$$

wobei

M ausgewählt ist aus den Metallkationen $Zn^{2+}$, $Fe^{2+}$, $Ni^{2+}$, $Mn^{2+}$, $Co^{2+}$, $Sr^{2+}$, $Sn^{2+}$, $Pb^{2+}$ und, $Cu^{2+}$, bevorzugt ist M $Zn^{2+}$, $Fe^{2+}$, $Co^{2+}$ oder $Ni^{2+}$,
X sind ein oder mehrere (d.h. verschiedene) Anionen, vorzugsweise ein Anion ausgewählt aus der Gruppe der Halogenide (d.h. Fluorid, Chlorid, Bromid, Iodid), Hydroxid, Sulfat, Carbonat, Cyanat, Thiocyanat, Isocyanat, Isothiocyanat, Carboxylat, Oxalat und Nitrat;
n ist 1, wenn X = Sulfat, Carbonat oder Oxalat ist und
n ist 2, wenn X = Halogenid, Hydroxid, Carboxylat, Cyanat, Thiocyanat, Isocyanat, Isothiocyanat oder Nitrat ist,

oder geeignete Metallsalze besitzen die allgemeine Formel (IV),

$$M_r(X)_3 \qquad (IV)$$

wobei

M ausgewählt ist aus den Metallkationen $Fe^{3+}$, $Al^{3+}$, $Co^{3+}$ und $Cr^{3+}$,
X sind ein oder mehrere (d.h. verschiedene) Anionen, vorzugsweise ein Anion ausgewählt aus der Gruppe der Halogenide (d.h. Fluorid, Chlorid, Bromid, Iodid), Hydroxid, Sulfat, Carbonat, Cyanat, Thiocyanat, Isocyanat, Isothiocyanat, Carboxylat, Oxalat und Nitrat;
r ist 2, wenn X = Sulfat, Carbonat oder Oxalat ist und
r ist 1, wenn X = Halogenid, Hydroxid, Carboxylat, Cyanat, Thiocyanat, Isocyanat, Isothiocyanat oder Nitrat ist,

oder geeignete Metallsalze besitzen die allgemeine Formel (V),

$$M(X)_s \qquad (V)$$

wobei

M ausgewählt ist aus den Metallkationen $Mo^{4+}$, $V^{4+}$ und $W^{4+}$
X sind ein oder mehrere (d.h. verschiedene) Anionen, vorzugsweise ein Anion ausgewählt aus der Gruppe der Halogenide (d.h. Fluorid, Chlorid, Bromid, Iodid), Hydroxid, Sulfat, Carbonat, Cyanat, Thiocyanat, Isocyanat, Isothiocyanat, Carboxylat, Oxalat und Nitrat;
s ist 2, wenn X = Sulfat, Carbonat oder Oxalat ist und
s ist 4, wenn X = Halogenid, Hydroxid, Carboxylat, Cyanat, Thiocyanat, Isocyanat, Isothiocyanat oder Nitrat ist,

oder geeignete Metallsalze besitzen die allgemeine Formel (VI),

$$M(X)_t \qquad (VI)$$

wobei

M ausgewählt ist aus den Metallkationen $Mo^{6+}$ und $W^{6+}$
X sind ein oder mehrere (d.h. verschiedene) Anionen, vorzugsweise ein Anion ausgewählt aus der Gruppe der Halogenide (d.h. Fluorid, Chlorid, Bromid, Iodid), Hydroxid, Sulfat, Carbonat, Cyanat, Thiocyanat, Isocyanat, Isothiocyanat, Carboxylat, Oxalat und Nitrat;
t ist 3, wenn X = Sulfat, Carbonat oder Oxalat ist und
t ist 6, wenn X = Halogenid, Hydroxid, Carboxylat, Cyanat, Thiocyanat, Isocyanat, Isothiocyanat oder Nitrat ist,

Beispiele geeigneter Metallsalze sind Zinkchlorid, Zinkbromid, Zinkjodid, Zinkacetat, Zinkacetylacetonat, Zinkbenzoat, Zinknitrat, Eisen(II)sulfat, Eisen(II)bromid, Eisen(II)chlorid, Eisen(III)chlorid, Cobalt(II)chlorid, Cobalt(II)thiocyanat, Nickel(II)chlorid und Nickel(II)nitrat. Es können auch Mischungen verschiedener Metallsalze eingesetzt werden.
Zur Herstellung der Doppelmetallcyanid-Verbindungen geeignete Metallcyanidsalze besitzen bevorzugt die allgemeine Formel (VII)

$$(Y)_aM'(CN)_b(A)_c \qquad (VII)$$

wobei

M' ausgewählt ist aus einem oder mehreren Metallkationen der Gruppe bestehend aus Fe(II), Fe(III), Co(II), Co(III), Cr(II), Cr(III), Mn(II), Mn(III), Ir(III), Ni(II), Rh(III), Ru(II), V(IV) und V(V), bevorzugt ist M' ein oder mehrere Metallkationen der Gruppe bestehend aus Co(II), Co(III), Fe(II), Fe(III), Cr(III), Ir(III) und Ni(II),
Y ausgewählt ist aus einem oder mehreren Metallkationen der Gruppe bestehend aus Alkalimetall (d.h. $Li^+$, $Na^+$, $K^+$, $Rb^+$)und Erdalkalimetall (d.h. $Be^{2+}$, $Mg^{2+}$, $Ca^{2+}$, $Sr^{2+}$, $Ba^{2+}$),
A ausgewählt ist aus einem oder mehreren Anionen der Gruppe bestehend aus Halogenide (d.h. Fluorid, Chlorid, Bromid, Iodid), Hydroxid, Sulfat, Carbonat, Cyanat, Thiocyanat, Isocyanat, Isothiocyanat, Carboxylat, Azid, Oxalat oder Nitrat und
a, b und c sind ganzzahlige Zahlen, wobei die Werte für a, b und c so gewählt sind, dass die Elektroneutralität des Metallcyanidsalzes gegeben ist; a ist vorzugsweise 1, 2, 3 oder 4; b ist vorzugsweise 4, 5 oder 6; c besitzt bevorzugt den Wert 0.

Beispiele geeigneter Metallcyanidsalze sind Natriumhexacyanocobaltat(III), Kaliumhexacyanocobaltat(III), Kaliumhexacyanoferrat(II), Kaliumhexacyanoferrat(III), Calcium-hexacyanocobaltat(III) und Lithiumhexacyanocobaltat(III).
Bevorzugte Doppelmetallcyanid-Verbindungen, die in den DMC-Katalysatoren enthalten sind, sind Verbindungen der allgemeinen Formel (VIII)

$$M_x[M'_{x'}(CN)_y]_z \qquad (VIII)$$

worin M wie in Formel (III) bis (VI) und
M' wie in Formel (VII) definiert ist, und
x, x', y und z sind ganzzahlig und so gewählt, dass die Elektronenneutralität der Doppelmetallcyanidverbindung gegeben ist.

Vorzugsweise ist
x = 3, x' = 1, y = 6 und z = 2,
M = Zn(II), Fe(II), Co(II) oder Ni(II) und
M' = Co(III), Fe(III), Cr(III) oder Ir(III).

Beispiele geeigneter Doppelmetallcyanidverbindungen a) sind Zinkhexacyanocobaltat(III), Zink-hexacyanoiridat(III), Zinkhexacyanoferrat(III) und Cobalt(II)hexacyanocobaltat(III). Weitere Beispiele geeigneter Doppelmetallcyanid-Verbindungen sind z.B. US 5 158 922 (Spalte 8, Zeilen 29 - 66) zu entnehmen. Besonders bevorzugt verwendet wird Zinkhexacyanocobaltat(III).

Die bei der Herstellung der DMC-Katalysatoren zugesetzten organischen Komplexliganden sind beispielsweise in US 5 158 922 (siehe insbesondere Spalte 6, Zeilen 9 bis 65), US 3 404 109, US 3 829 505, US 3 941 849, EP-A 700 949, EP-A 761 708, JP 4 145 123, US 5 470 813, EP-A 743 093 und WO-A 97/40086) offenbart. Beispielsweise werden als organische Komplexliganden wasserlösliche, organische Verbindungen mit Heteroatomen, wie Sauerstoff, Stickstoff, Phosphor oder Schwefel, die mit der Doppelmetallcyanid-Verbindung Komplexe bilden können, eingesetzt. Bevorzugte organische Komplexliganden sind Alkohole, Aldehyde, Ketone, Ether, Ester, Amide, Harnstoffe, Nitrile, Sulfide und deren Mischungen. Besonders bevorzugte organische Komplexliganden sind aliphatische Ether (wie Dimethoxyethan), wasserlösliche aliphatische Alkohole (wie Ethanol, Isopropanol, n-Butanol, iso-Butanol, sek.-Butanol, tert-Butanol, 2-Methyl-3-buten-2-ol und 2-Methyl-3-butin-2-ol), Verbindungen, die sowohl aliphatische oder cycloaliphatische Ethergruppen wie auch aliphatische Hydroxylgruppen enthalten (wie z.B. Ethylenglykol-mono-tert.-butylether, Diethylenglykol-mono-tert.-butylether, Tripropylenglykol-mono-methylether und 3-Methyl-3-oxetan-methanol). Höchst bevorzugte organische Komplexliganden sind ausgewählt aus einer oder mehrerer Verbindungen der Gruppe bestehend aus Dimethoxyethan, tert-Butanol 2-Methyl-3-buten-2-ol, 2-Methyl-3-butin-2-ol, Ethylenglykol-mono-tert. -butylether und 3 -Methyl-3 -oxetan-methanol.

Optional werden bei der Herstellung der DMC-Katalysatoren eine oder mehrere komplexbildende Komponente(n) aus den Verbindungsklassen der Polyether, Polyester, Polycarbonate, Polyalkylenglykolsorbitanester, Polyalkylenglykolglycidylether, Polyacrylamid, Poly(acrylamid-co-acrylsäure), Polyacrylsäure, Poly(acrylsäure-co-maleinsäure), Polyacrylnitril, Polyalkylacrylate, Polyalkylmethacrylate, Polyvinylmethylether, Polyvinylethylether, Polyvinylacetat, Polyvinylalkohol, Poly-N-vinylpyrrolidon, Poly(N-vinylpyrrolidon-co-acrylsäure), Polyvinylmethylketon, Poly(4-vinylphenol), Poly(acrylsäure-co-styrol), Oxazolinpolymere, Polyalkylenimine, Maleinsäure- und Maleinsäureanhydridcopolymere, Hydroxyethylcellulose und Polyacetale, oder der Glycidylether, Glycoside, Carbonsäureester mehrwertiger Alkohole, Gallensäuren oder deren Salze, Ester oder Amide, Cyclodextrine, Phosphorverbindungen, $\alpha,\beta$-ungesättigten Carbonsäureester oder ionische Oberflächen- bzw. grenzflächenaktiven Verbindungen eingesetzt.

Bevorzugt werden bei der Herstellung der DMC-Katalysatoren im ersten Schritt die wässrigen Lösungen des Metallsalzes (z.B. Zinkchlorid), eingesetzt im stöchiometrischen Überschuss (mindestens 50 Mol-%) bezogen auf Metallcyanidsalz (also mindestens ein molares Verhältnis von Metallsalz zu Metallcyanidsalz von 2,25 zu 1,00) und des Metallcyanidsalzes (z.B. Kaliumhexacyanocobaltat) in Gegenwart des organischen Komplexliganden (z.B. tert.-Butanol) umgesetzt, wobei sich eine Suspension bildet, die die Doppelmetallcyanid-Verbindung (z.B. Zinkhexacyanocobaltat), Wasser, überschüssiges Metallsalz, und den organischen Komplexliganden enthält.

Der organische Komplexligand kann dabei in der wässrigen Lösung des Metallsalzes und/oder des Metallcyanidsalzes vorhanden sein, oder er wird der nach Ausfällung der Doppelmetallcyanid-Verbindung erhaltenen Suspension unmittelbar zugegeben. Es hat sich als vorteilhaft erwiesen, die wässrigen Lösungen des Metallsalzes und des Metallcyanidsalzes, und den organischen Komplexliganden unter starkem Rühren zu vermischen. Optional wird die im ersten Schritt gebildete Suspension anschließend mit einer weiteren komplexbildenden Komponente behandelt. Die komplexbildende Komponente wird dabei bevorzugt in einer Mischung mit Wasser und organischem Komplexliganden eingesetzt. Ein bevorzugtes Verfahren zur Durchführung des ersten Schrittes (d.h. der Herstellung der Suspension) erfolgt unter Einsatz einer Mischdüse, besonders bevorzugt unter Einsatz eines Strahldispergators wie in WO-A 01/39883 beschrieben.

Im zweiten Schritt erfolgt die Isolierung des Feststoffs (d.h. die Vorstufe des erfindungsgemäßen Katalysators) aus der Suspension durch bekannte Techniken, wie Zentrifugation oder Filtration.

In einer bevorzugten Ausführungsvariante wird der isolierte Feststoff anschließend in einem dritten Verfahrensschritt mit einer wässrigen Lösung des organischen Komplexliganden gewaschen (z.B. durch Resuspendieren und anschließende erneute Isolierung durch Filtration oder Zentrifugation). Auf diese Weise können zum Beispiel wasserlösliche Nebenprodukte, wie Kaliumchlorid, aus dem Katalysator entfernt werden. Bevorzugt liegt die Menge des organischen Komplexliganden in der wässrigen Waschlösung zwischen 40 und 80 Gew.-%, bezogen auf die Gesamtlösung.

Optional wird im dritten Schritt der wässrigen Waschlösung weitere komplexbildende Komponente, bevorzugt im Bereich zwischen 0,5 und 5 Gew.-%, bezogen auf die Gesamtlösung, zugefügt.

Außerdem ist es vorteilhaft, den isolierten Feststoff mehr als einmal zu waschen. Vorzugsweise wird in einem ersten Waschschritt (iii-1) mit einer wässrigen Lösung des organischen Komplexliganden (beispielsweise mit einer wässrigen Lösung des ungesättigten Alkohols) gewaschen (z.B. durch Resuspendieren und anschließende erneute Isolierung durch Filtration oder Zentrifugation), um auf diese Weise zum Beispiel wasserlösliche Nebenprodukte, wie Kaliumchlorid, aus dem Katalysator zu entfernen. Besonders bevorzugt liegt die Menge des organischen Komplexliganden (beispielsweise ungesättigten Alkohols) in der wässrigen Waschlösung zwischen 40 und 80 Gew.-%, bezogen auf die Gesamtlösung des ersten Waschschritts. In den weiteren Waschschritten (iii-2) wird entweder der erste Waschschritt einmal oder mehrmals, vorzugsweise einmal bis dreimal wiederholt, oder vorzugsweise wird eine nichtwässrige Lösung, wie z.B. eine Mischung oder Lösung aus organischen Komplexliganden (beispielsweise ungesättigter Alkohol) und weiterer komplexbildender Komponente (bevorzugt im Bereich zwischen 0,5 und 5 Gew.-%, bezogen auf die Gesamtmenge der Waschlösung des Schrittes (iii-2)), als Waschlösung eingesetzt und der Feststoff damit einmal oder mehrmals, vorzugsweise einmal bis dreimal gewaschen.

Der isolierte und gegebenenfalls gewaschene Feststoff wird anschließend, gegebenenfalls nach Pulverisierung, bei Temperaturen von im allgemeinen 20 - 100°C und bei Drücken von im Allgemeinen 0,1 mbar bis Normaldruck (1013 mbar) getrocknet.

Ein bevorzugtes Verfahren zur Isolierung der DMC-Katalysatoren aus der Suspension durch Filtration, Filterkuchenwäsche und Trocknung wird in WO-A 01/80994 beschrieben.

Neben den bevorzugt eingesetzten DMC-Katalysatoren auf Basis von Zinkhexacyanocobaltat ($Zn_3[Co(CN)_6]_2$) können für das erfindungsgemäße Verfahren auch andere dem Fachmann aus dem Stand der Technik für die Copolymerisation von Epoxiden und Kohlendioxid bekannte Metallkomplexkatalysatoren auf Basis der Metalle Zink und/oder Cobalt eingesetzt werden. Dies beinhaltet insbesondere sogenannte Zink-Glutarat-Katalysatoren (beschrieben z.B. in M. H. Chisholm et al., Macromolecules 2002, 35, 6494), sogenannte Zink-Diiminat-Katalysatoren (beschrieben z.B. in S. D. Allen, J. Am. Chem. Soc. 2002, 124, 14284) und sogenannte Cobalt-Salen-Katalysatoren (beschrieben z.B. in US 7,304,172 B2, US 2012/0165549 A1).

Die nach dem erfindungsgemäßen Verfahren erhältlichen Polyethercarbonatalkohole weisen einen hohen Gehalt an eingebautem $CO_2$ auf und können problemlos verarbeitet werden, insbesondere durch Umsetzung mit Di- und/oder Polyisocyanaten zu Polyurethanen, insbesondere Polyurethan-Weichschaumstoffen.

Weitere Anwendungsmöglichkeiten sind in Wasch- und Reinigungsmittelformulierungen, wie beispielsweise für Textil- oder Oberflächenreinigung, Bohrflüssigkeiten, Kraftstoffadditiven, ionischen und nicht-ionischen Tensiden, Dispergiermittel, Schmiermitteln, Prozesschemikalien für die Papier- oder Textilherstellung, kosmetischen Formulierungen, wie beispielsweise in Haut- oder Sonnenschutzcreme oder Haarpflegeprodukten zu finden.

In einer ersten Ausführungsform betrifft die Erfindung ein Verfahren zur Herstellung von Polyethercarbonatalkoholen durch die Schritte

(i) Anlagerung von cyclischem Carbonat an eine H-funktionelle Startersubstanz in Gegenwart eines Katalysators A zur Bildung eines Gemisches enthaltend Polyethercarbonatalkohol,
(ii) Abtrennung des Katalysators A vom Gemisch aus Schritt (i),
(iii) Anlagerung von Alkylenoxid und Kohlenstoffdioxid an den aus Schritt (i) oder (ii) erhaltenen Polyethercarbonatalkohol in Anwesenheit eines Katalysators B.

In einer zweiten Ausführungsform betrifft die Erfindung ein Verfahren gemäß der ersten Ausführungsform, dadurch gekennzeichnet, dass als Katalysator A mindestens eine Verbindung eingesetzt wird, die ausgewählt ist aus der Gruppe bestehend aus Titanverbindungen, Zinnverbindungen, Alkalimetall- und Erdalkalimetallsalzen, Molybdaten, Wolframaten, Vanadaten und Phosphaten.

In einer dritten Ausführungsform betrifft die Erfindung ein Verfahren gemäß der ersten Ausführungsform, dadurch gekennzeichnet, dass als Katalysator A mindestens eine Verbindung eingesetzt wird, die ausgewählt ist aus tribasischen Alkaliphosphaten, Alkalicarboxylaten, Alkaliacetaten und Verbindungen der Formel (II)

$$MnX \qquad (II),$$

wobei

M ausgewählt ist aus den Alkalimetallkationen Li+, Na+, K+ und Cs+,

X ausgewählt ist aus den Anionen $VO_3^-$, $WO_4^{2-}$, $MoO_4^{2-}$ und $VO_4^{3-}$,

n ist 1, wenn X = $VO_3^-$,

n ist 2, wenn X = $WO_4^{2-}$ oder $MoO_4^{2-}$

n ist 3, wenn X = $VO_4^{3-}$.

In einer vierten Ausführungsform betrifft die Erfindung ein Verfahren gemäß der ersten Ausführungsform, dadurch gekennzeichnet, dass der Katalysator A mindestens eine Verbindung ist ausgewählt aus der Gruppe bestehend aus $Na_3PO_4$, $K_3PO_4$, $Na_3VO_4$, $K_3VO_4$, $Cs_3VO_4$, $NaVO_3$, $KVO_3$ und $CsVO_3$.

In einer fünften Ausführungsform betrifft die Erfindung ein Verfahren gemäß einer der Ausführungsformen 1 bis 4, dadurch gekennzeichnet, dass in Schritt (i) als H-funktionelle Startersubstanz mindestens einer Verbindung der Gruppe bestehend aus Wasser, Ethylenglykol, Propylenglykol, 1,3-Butandiol, 1,4-Butandiol, 1,5-Pentandiol, 2-Methylpropan-1,3-diol, Neopentylglykol, 1,6-Hexandiol, 1,8-Octandiol, Diethylenglykol, Dipropylenglykol, Glycerin, Trimethylolpropan, Pentaerythrit und Sorbitol eingesetzt wird.

In einer sechsten Ausführungsform betrifft die Erfindung ein Verfahren gemäß einer der Ausführungsformen 1 bis 5, dadurch gekennzeichnet, dass in Schritt (i) als cyclisches Carbonat Propylencarbonat, Ethylencarbonat oder eine Mischung aus Propylencarbonat und Ethylencarbonat eingesetzt wird.

In einer siebten Ausführungsform betrifft die Erfindung ein Verfahren gemäß einer der Ausführungsformen 1 bis 6, dadurch gekennzeichnet, dass in Schritt (i) die Anlagerung des cyclischen Carbonats an die H-funktionelle Startersubstanz bei einer Temperatur von 130°C bis 200°C, bevorzugt 140°C bis 190°C durchgeführt wird.

In einer achten Ausführungsform betrifft die Erfindung ein Verfahren gemäß einer der Ausführungsformen 1 bis 7, dadurch gekennzeichnet, dass der Polyethercarbonatalkohol aus Schritt (i) oder (ii) 15 bis 40 Gew.-% an eingebauten $CO_2$, bevorzugt 15 bis 30 Gew.-%, aufweist.

In einer neunten Ausführungsform betrifft die Erfindung ein Verfahren gemäß einer der Ausführungsformen 1 bis 8, dadurch gekennzeichnet, dass in Schritt (iii)

(a) eine H-funktionelle Startersubstanz oder ein Gemisch aus mindestens zwei H-funktionellen Startersubstanzen oder ein Suspensionsmittel vorgelegt und gegebenenfalls Wasser und/oder andere leicht flüchtige Verbindungen durch erhöhte Temperatur und/oder reduziertem Druck entfernt werden ("Trocknung"), wobei der Katalysator B der H-funktionellen Startersubstanz oder dem Gemisch von mindestens zwei H-funktionellen Startersubstanzen oder dem Suspensionsmittel vor oder nach der Trocknung zugesetzt wird,

($\beta$) gegebenenfalls zur Aktivierung eines Doppelmetallcyanid-Katalysators eine Teilmenge (bezogen auf die Gesamtmenge der bei der Aktivierung und Copolymerisation eingesetzten Menge an Alkylenoxiden) von Alkylenoxid zu der aus Schritt (a) resultierenden Mischung zugesetzt wird, wobei diese Zugabe einer Teilmenge an Alkylenoxid gegebenenfalls in Gegenwart von $CO_2$ erfolgen kann, und wobei dann die aufgrund der folgenden exothermen chemischen Reaktion auftretende Temperaturspitze ("Hotspot") und/oder ein Druckabfall im Reaktor jeweils abgewartet wird, und wobei der Schritt ($\beta$) zur Aktivierung auch mehrfach erfolgen kann,

($\gamma$) Alkylenoxid, Kohlendioxid und gegebenenfalls eine H-funktionelle Startersubstanz zu der aus Schritt ($\alpha$) oder gegebenenfalls ($\beta$) resultierenden Mischung zugesetzt werden,

wobei wenigstens in einem der Schritte ($\alpha$) oder ($\gamma$) der nach Schritt (i) oder (ii) erhaltene Polyethercarbonatalkohol als H-funktionelle Startersubstanz zugesetzt wird.

In einer zehnten Ausführungsform betrifft die Erfindung ein Verfahren gemäß der neunten Ausführungsform, dadurch gekennzeichnet, dass der nach Schritt (i) oder (ii) erhaltene Polyethercarbonatalkohol mindestens in ($\alpha$) eingesetzt wird.

In einer elften Ausführungsform betrifft die Erfindung ein Verfahren gemäß einer der Ausführungsformen 1 bis 10, dadurch gekennzeichnet, dass das in Schritt (iii) gebildete cyclische Carbonat wieder in Schritt (i) eingesetzt wird.

In einer zwölften Ausführungsform betrifft die Erfindung ein Verfahren gemäß einer der Ausführungsformen 1 bis 11, dadurch gekennzeichnet, dass als Katalysator B mindestens ein DMC-Katalysator oder ein Metallkomplexkatalysator auf Basis der Metalle Zink und/oder Cobalt eingesetzt wird.

In einer dreizehnten Ausführungsform betrifft die Erfindung ein Verfahren gemäß einer der Ausführungsformen 1 bis 12, dadurch gekennzeichnet, dass als Alkylenoxid Propylenoxid, Ethylenoxid oder eine Mischung aus Propylenoxid und Ethylenoxid eingesetzt wird.

In einer vierzehnten Ausführungsform betrifft die Erfindung ein Polyethercarbonatalkohol erhältlich nach einem Verfahren gemäß einer der Ausführungsformen 1 bis 13.

In einer fünfzehnten Ausführungsform betrifft die Erfindung die Verwendung eines Polyethercarbonatalkohols

gemäß der Ausführungsform 14 in Wasch- und Reinigungsmittelformulierungen, Bohrflüssigkeiten, Kraftstoffadditiven, ionischen und nicht-ionischen Tensiden, Dispergiermitteln, Schmiermitteln, Prozesschemikalien für die Papier- oder Textilherstellung, kosmetischen Formulierungen oder in der Herstellung von Polyurethanen.

In einer sechszehnten Ausführungsform betrifft die Erfindung ein Verfahren gemäß einer der Ausführungsformen 1 bis 13, dadurch gekennzeichnet, dass in Schritt (ii) Wasser eingesetzt wird.

Beispiele:

Methoden:

OH-Zahl:

Die Bestimmung der OH-Zahlen (Hydroxylzahlen) erfolgte gemäß der Vorschrift der DIN 53240-2 (November 2007).

GPC:

Das Zahlenmittel $M_n$ und das Gewichtsmittel $M_w$ des Molekulargewichts sowie die Polydispersität PDI ($M_w/M_n$) der Produkte wurde mittels Gelpermeationschromatographie (GPC) bestimmt. Es wurde vorgegangen nach DIN 55672-1 (März 2016): "Gelpermeationschromatographie, Teil 1 - Tetrahydrofuran als Elutionsmittel" (SECurity GPC-System von PSS Polymer Service, Flussrate 1,0 ml/min; Säulen: 2×PSS SDV linear M, 8x300 mm, 5 μm; RID-Detektor). Dabei wurden Polystyrolproben bekannter Molmasse zur Kalibrierung verwendet.

**$CO_2$-Gehalt im Polyethercarbonatalkohol:**

Der Anteil an eingebautem $CO_2$ im resultierenden Polyethercarbonatalkohol ($CO_2$-Gehalt) sowie das Verhältnis von Propylencarbonat zu Polyethercarbonatalkohol wurden mittels $^1$H-NMR (Firma Bruker, DPX 400, 400 MHz; Pulsprogramm zg30, Wartezeit dl: 10s, 64 Scans) bestimmt. Die Probe wurde jeweils in deuteriertem Chloroform gelöst. Die relevanten Resonanzen im $^1$H-NMR (bezogen auf TMS = 0 ppm) sind wie folgt:

Tabelle 1: Für Verfahren mit cPC und/oder PO (Beispiele 1, 4 und 5):

| **Gruppe im Molekül** | **#H** | **Chemische Verschiegung von bis [ppm]** | | **Integral (Int.) aus NMR-Spektrum bzw. Rechenoperation** |
|---|---|---|---|---|
| PPO (MeGr.) | 3,00 | 0,98 | 1,18 | Int.(NMR-Spektrum) |
| cPC | 1,00 | 4,52 | | Int.(NMR-Spektrum) |
| lPC | 3,00 | 3,82 | 4,18 | Int.(NMR-Spektrum beider Signale) - 2 x Int. (cPC) |
| | | 4,75 | 5,01 | |

Tabelle 2: Für Verfahren mit zusätzlichem cEC (Beispiele 2 und 3):

| **Gruppe im Molekül** | **#H** | **Chemische Verschiegung von bis [ppm]** | | **Integral (Int.) aus NMR-Spektrum bzw. Rechenoperation** |
|---|---|---|---|---|
| PPO (MeGr.) | 3,00 | 0,98 | 1,18 | Int.(NMR-Spektrum) |
| PPO+PEO | n.a. | 3,05 | 3,83 | Int.(NMR-Spektrum) |
| PEO | 4,00 | | | Int.(PPO+PEG) - Int. (PPO(MeGr.)) |
| cEC | 4,00 | 4,48 | | Int.(NMR-Spektrum) |
| cPC | 1,00 | 4,52 | | Int.(NMR-Spektrum) |
| lEC | 4,00 | 4,18 | 4,29 | Int.(NMR-Spektrum) |

(fortgesetzt)

| Gruppe im Molekül | #H | Chemische Verschiegung von bis [ppm] | | Integral (Int.) aus NMR-Spektrum bzw. Rechenoperation |
|---|---|---|---|---|
| lPC | 3,00 | 3,82 | 4,18 | ∑ Int.(NMR-Spektrum) - 2 x Int.(cPC) |
| | | 4,75 | 5,01 | |
| Wobei folgende Abkürzungen verwendet werden:<br>PPO für Polypropylenoxid (d.h. ohne eingebautem Kohlendioxid),<br>PEO für Polyethylenoxid (d.h. ohne eingebautem Kohlendioxid),<br>cPC für cyclisches Propylencarbonat,<br>cEC für cyclisches Ethylencarbonat,<br>lPC für lineares Propylencarbonat (d.h. mit eingebautem Kohlendioxid),<br>lEC für lineares Ethylencarbonat (d.h. mit eingebautem Kohlendioxid.). | | | | |

$$\text{Massenanteil CO}_2 = \frac{(\text{Int.(lEC)}/4 * \text{M(CO}_2) + \text{Int.(lPC)}/3 * \text{M(CO}_2))}{(Int.(PPO)/3 * M(PO) + Int.(PEO)/4 * M(EO) + Int.(lEC)/4 * M(lEC) + Int.(lPC)/3 * M(lPC))}$$

wobei M(PO) = 58 g/mol, M($CO_2$) = 44 g/mol, M(EO) = 44 g/mol, M(lEC) = 88 g/mol, M(lPC) = 102 g/mol.

Um aus den Werten der Zusammensetzung der Reaktionsmischung die Zusammensetzung bezogen auf den Polymer-Anteil (bestehend aus Polyether, welcher aus Propylenoxid während der unter $CO_2$-freien Bedingungen stattfindenden Aktivierungsschritten aufgebaut wurde, und Polyethercarbonatalkohol, aufgebaut aus Starter, Propylenoxid und Kohlendioxid während den in Gegenwart von $CO_2$ stattfindenden Aktivierungsschritten und während der Copolymerisation) zu berechnen, wurden die Nicht-Polymer-Bestandteile der Reaktionsmischung (d.h. cyclisches Propylencarbonat sowie ggf. vorhandenes, nicht umgesetztes Propylenoxid) rechnerisch eliminiert.

**Eingesetzte Rohstoffe:**

Als DMC-Katalysator wird ein Doppelmetallcyanid-Katalysator, enthaltend Zinkhexacyanocobaltat, tert.-Butanol und Polypropylenglykol mit einem zahlenmittleren Molekulargewicht von 1000 g/mol; gemäß Beispiel 6 in WO-A 01/80994 eingesetzt.

| | |
|---|---|
| Kaliumorthovanadat ($K_3VO_4$): | ABCR 99,9 % |
| Natriumorthovanadat ($Na_3VO_4$): | Sigma-Aldrich 99 % |
| Propylencarbonat (cPC): | Sigma-Aldrich 99 % |
| Ethylencarbonat (cEC): | Sigma-Aldrich 99 % |
| 1,6-Hexandiol: | Sigma-Aldrich 99 % |
| Polyol 1 | Polyetherpolyol, hergestellt durch Anlagerung von Propylenoxid an Propylenglykol mit einer Funktionalität von 2 und einem Molekulargewicht von 217 g/mol |
| Polyol 2 | Polyetherpolyol, hergestellt durch Anlagerung von Propylenoxid an Propylenglykol mit einer Funktionalität von 2 und einem Molekulargewicht von 432 g/mol |
| $Mg_2SO_4$ | Sigma-Aldrich 99 % |
| Diethylenglycol | Sigma-Aldrich 99 % |

Herstellung von Polyethercarbonatalkoholen:

**Beispiel 1 (erfindungsgemäß)**

Schritt (i):

Ein 500 mL Vierhalsglaskolben wurde mit Rückflusskühler, KPG-Rührer, Thermofühler, Stickstoffzuleitung und

Gasaustritt/Gasabfuhr mit Überdruckventil ausgestattet. Anschließend wurden 500,5 g cyclisches Propylencarbonat, 59,6 g Diethylenglycol und 5,68 g $K_3VO_4$ zugegeben. Für 30 Minuten wurde 10 L/h Stickstoff eingeleitet, wobei die Suspension dabei mit 300 U/min gerührt wurde. Im Anschluss wurde die Suspension auf 180°C aufgeheizt, wobei die Reaktion sich durch die Bildung von gasförmigem $CO_2$ bemerkbar machte. Die Reaktionsmischung wurde so lange bei der eingestellten Temperatur gehalten, bis die Gasentwicklung zum Erliegen kommt.

Schritt (ii):

100 g des in Schritt (i) erhaltenen Polyethercarbonatalkohols wurden in 150 mL Toluol gelöst, und mit 3 x 80 mL Wasser extrahiert. Die vereinigte organische Phase wurde mit $Mg_2SO_4$ getrocknet und das Lösungsmittel unter Vakuum bei 60°C entfernt.

Schritt (iii)

($\alpha$):

81 mg des DMC-Katalysators wurden in 120,1 g des aus Schritt (ii) erhaltenen Polyethercarbonatalkohols suspendiert und die Suspension anschließend in einen 2 L Druckreaktor mit Gasdosierungseinrichtung gefüllt. Die Suspension wurde dann auf 130°C aufgeheizt und über 30 min wurde 30 L/h Stickstoff eingeleitet.

($\beta$):

In dem Reaktor wurden bei 130°C, 1000 U/min und bei einem Vordruck von 2 bar $N_2$, eine Menge von 8 g Propylenoxid (PO) eingeleitet und das Anspringen der Reaktion abgewartet. Dieses machte sich durch eine Temperaturspitze ("Hotspot") und durch einen Druckabfall auf den Ausgangsdruck bemerkbar. Nach dem zweiten Druckabfall wurde der Reaktor entspannt und mit p = 30 bar $CO_2$ beaufschlagt. Dieser Vorgang wurde mit 15 g Propylenoxid (PO) zweimal wiederholt.

($\gamma$):

Anschließend wurde Propylenoxid (214,9 g) mit 1,23 g/min bei 108 °C kontinuierlich in den Reaktor eindosiert. Nach beendeter PO-Zugabe wurde bis Druckkonstanz nachgerührt.
Das erhaltene Produktgemisch wurde mittels Rotationsverdampfer von Spuren monomeren Propylenoxids befreit. Die Ergebnisse hinsichtlich $CO_2$ Gehalt im Endprodukt, zahlengemittelte Molekulargewicht $M_n$ sowie der Dispersionsindex (PDI) sind in Tabelle 3 aufgelistet.

Beispiel 2 (erfindungsgemäß):

Beispiel 2 wurde gemäß Beispiel 1 durchgeführt, wobei in Schritt (i) als Edukte 1000 g cEC, 109,9 g Diethylenglycol und 13,2 g $K_3PO_4$ bei 150 °C eingesetzt wurden.
Für Schritt (iii) wurden in (a) 120 g des Polyethercarbonatalkohols aus Schritt (ii) als H-funktionelle Startersubstanz und 200 ppm DMC-Katalysator eingesetzt und in ($\gamma$) 153,3 g PO.

Beispiel 3 (erfindungsgemäß)

Beispiel 3 wurde gemäß Beispiel 1 durchgeführt, wobei in Schritt i) als Edukte 80,7 g Polyol 1, 200 g cEC und 2,09 g $Na_3VO_4$ bei 150 °C eingesetzt wurden.
Für Schritt (iii) wurden in ($\alpha$) 120 g des Polyethercarbonatalkohols aus Schritt (ii), und 200 ppm DMC-Katalysator eingesetzt und in ($\gamma$) 298,5 g PO.

**Beispiel 4 (nicht erfindungsgemäß)**

Beispiel 4 wurde gemäß Schritt (iii) von Beispiel 1 durchgeführt, wobei in ($\alpha$) 120 g Polyol 2 und 200 ppm DMC-Katalysator eingesetzt wurden und in ($\gamma$) 417,1 g PO.

**Beispiel 5 (nicht erfindungsgemäß)**

Beispiel 5 wurde gemäß Beispiel 4 durchgeführt, wobei der $CO_2$-Druck auf 50 bar eingestellt wurde.

Tabelle 3: Eigenschaften der Polyethercarbonatalkohole

| Beispiel | Gew.-% $CO_2$ im Endprodukt | Mn [g/ mol] | PDI |
|---|---|---|---|
| 1 | 18 | 2614 | 2,26 |
| 2 | 20 | 3216 | 1,46 |
| 3 | 20 | 3665 | 1,84 |
| 4* | 13 | 2747 | 1,47 |
| 5* | 15 | 2569 | 1,49 |
| * Vergleichsbeispiel (nicht erfindungsgemäß) | | | |

Die Beispiele 1 bis 3 zeigen die Herstellung von Polyethercarbonatalkoholen gemäß dem erfindungsgemäßen Verfahren. Das Verfahren führt mit unterschiedlichen cyclischen Carbonaten und Katalysatoren zu Polyethercarbonatalkoholen mit hohen Anteilen an eingebautem $CO_2$. Im Gegensatz dazu führt das Verfahren ohne cyclische Carbonate und nur mit der Anlagerung von $CO_2$ in Vergleichsbeispiel 4 zu einem deutlich niedrigeren Anteil an eingebautem $CO_2$. Selbst wenn der $CO_2$-Druck bei der Anlagerung auf 50 bar erhöht wird (Vergleichsbeispiel 5), so weist der erhaltene Polyethercarbonatalkohol niedrigere Anteile an eingebautem $CO_2$ auf als in den erfindungsgemäßen Beispielen 1 bis 3.

Durch das erfindungsgemäße Verfahren können somit Polyethercarbonatalkohole mit höheren Anteilen an eingebautem $CO_2$ erhalten werden oder der $CO_2$-Druck bei der Anlagerung von $CO_2$ deutlich erniedrigt werden.

**Patentansprüche**

**1.** Verfahren zur Herstellung von Polyethercarbonatalkoholen durch die Schritte

(i) Anlagerung von cyclischem Carbonat an eine H-funktionelle Startersubstanz in Gegenwart eines Katalysators A
zur Bildung eines Gemisches enthaltend Polyethercarbonatalkohol,
(ii) gegebenenfalls Abtrennung des Katalysators A vom Gemisch aus Schritt (i),
(iii) Anlagerung von Alkylenoxid und Kohlenstoffdioxid an den aus Schritt (ii) erhaltenen Polyethercarbonatalkohol in Anwesenheit eines Katalysators B.

**2.** Verfahren gemäß Anspruch 1, **dadurch gekennzeichnet, dass** als Katalysator A mindestens eine Verbindung eingesetzt wird, die ausgewählt ist aus der Gruppe bestehend aus Titanverbindungen, Zinnverbindungen, Alkalimetall- und Erdalkalimetallsalzen, Molybdaten, Wolframaten, Vanadaten und Phosphaten.

**3.** Verfahren gemäß Anspruch 1, **dadurch gekennzeichnet, dass** als Katalysator A mindestens eine Verbindung eingesetzt wird, die ausgewählt ist aus tribasischen Alkaliphosphaten, Alkalicarboxylaten, Alkaliacetaten und Verbindungen der Formel (II)

$$MnX \qquad (II),$$

wobei

M ausgewählt ist aus den Alkalimetallkationen Li+, Na+, K+ und Cs+,
X ausgewählt ist aus den Anionen $VO_3^-$, $WO_4^{2-}$, $MoO_4^{2-}$ und $VO_4^{3-}$,
n ist 1, wenn X = $VO_3^-$,
n ist 2, wenn X = $WO_4^{2-}$ oder $MoO_4^{2-}$
n ist 3, wenn X = $VO_4^{3-}$.

**4.** Verfahren gemäß Anspruch 1, **dadurch gekennzeichnet, dass** der Katalysator A mindestens eine Verbindung ist ausgewählt aus der Gruppe bestehend aus $Na_3PO_4$, $K_3PO_4$, $Na_3VO_4$, $K_3VO_4$, $Cs_3VO_4$, $NaVO_3$, $KVO_3$ und $CsVO_3$.

**5.** Verfahren gemäß einem der Ansprüche 1 bis 4, **dadurch gekennzeichnet, dass** in Schritt (i) als H-funktionelle Startersubstanz mindestens eine Verbindung der Gruppe bestehend aus Wasser, Ethylenglykol, Propylenglykol,

1,3-Butandiol, 1,4-Butandiol, 1,5-Pentandiol, 2-Methylpropan-1,3-diol, Neopentylglykol, 1,6-Hexandiol, 1,8-Octandiol, Diethylenglykol, Dipropylenglykol, Glycerin, Trimethylolpropan, Pentaerythrit und Sorbitol eingesetzt wird.

6. Verfahren gemäß einem der Ansprüche 1 bis 5, **dadurch gekennzeichnet, dass** in Schritt (i) als cyclisches Carbonat Propylencarbonat, Ethylencarbonat oder eine Mischung aus Propylencarbonat und Ethylencarbonat eingesetzt wird.

7. Verfahren gemäß einem der Ansprüche 1 bis 6, **dadurch gekennzeichnet, dass** in Schritt (i) die Anlagerung des cyclischen Carbonats an die H-funktionelle Startersubstanz bei einer Temperatur von 130°C bis 200°C, bevorzugt 140°C bis 190°C durchgeführt wird.

8. Verfahren gemäß einem der Ansprüche 1 bis 7, **dadurch gekennzeichnet, dass** der Polyethercarbonatalkohol aus Schritt (i) oder (ii) 15 bis 40 Gew.-% an eingebauten $CO_2$, bevorzugt 15 bis 30 Gew.-%, aufweist.

9. Verfahren gemäß einem der Ansprüche 1 bis 8, **dadurch gekennzeichnet, dass** in Schritt (iii)

   ($\alpha$) eine H-funktionelle Startersubstanz oder ein Gemisch aus mindestens zwei H-funktionellen Startersubstanzen oder ein Suspensionsmittel vorgelegt und gegebenenfalls Wasser und/oder andere leicht flüchtige Verbindungen durch erhöhte Temperatur und/oder reduziertem Druck entfernt werden ("Trocknung"), wobei der Katalysator B der H-funktionellen Startersubstanz oder dem Gemisch von mindestens zwei H-funktionellen Startersubstanzen oder dem Suspensionsmittel vor oder nach der Trocknung zugesetzt wird,
   ($\beta$) gegebenenfalls zur Aktivierung eines Doppelmetallcyanid-Katalysators eine Teilmenge (bezogen auf die Gesamtmenge der bei der Aktivierung und Copolymerisation eingesetzten Menge an Alkylenoxiden) von Alkylenoxid zu der aus Schritt ($\alpha$) resultierenden Mischung zugesetzt wird, wobei diese Zugabe einer Teilmenge an Alkylenoxid gegebenenfalls in Gegenwart von $CO_2$ erfolgen kann, und wobei dann die aufgrund der folgenden exothermen chemischen Reaktion auftretende Temperaturspitze ("Hotspot") und/oder ein Druckabfall im Reaktor jeweils abgewartet wird, und wobei der Schritt ($\beta$) zur Aktivierung auch mehrfach erfolgen kann,
   ($\gamma$) Alkylenoxid, Kohlendioxid und gegebenenfalls eine H-funktionelle Startersubstanz zu der aus Schritt ($\alpha$) oder gegebenenfalls ($\beta$) resultierenden Mischung zugesetzt werden,

   wobei wenigstens in einem der Schritte ($\alpha$) oder ($\gamma$) der nach Schritt (i) oder (ii) erhaltene Polyethercarbonatalkohol als H-funktionelle Startersubstanz zugesetzt wird.

10. Verfahren gemäß Anspruch 9, **dadurch gekennzeichnet, dass** der nach Schritt (i) oder (ii) erhaltene Polyethercarbonatalkohol mindestens in ($\alpha$) eingesetzt wird.

11. Verfahren gemäß einem der Ansprüche 1 bis 10, **dadurch gekennzeichnet, dass** das in Schritt (iii) gebildete cyclische Carbonat wieder in Schritt (i) eingesetzt wird.

12. Verfahren gemäß einem der Ansprüche 1 bis 11, **dadurch gekennzeichnet, dass** als Katalysator B mindestens ein DMC-Katalysator oder ein Metallkomplexkatalysator auf Basis der Metalle Zink und/oder Cobalt eingesetzt wird.

13. Verfahren gemäß einem der Ansprüche 1 bis 12, **dadurch gekennzeichnet, dass** als Alkylenoxid Propylenoxid, Ethylenoxid oder eine Mischung aus Propylenoxid und Ethylenoxid eingesetzt wird.

14. Polyethercarbonatalkohol erhältlich nach einem Verfahren gemäß einem der Ansprüche 1 bis 13.

15. Verwendung eines Polyethercarbonatalkohols gemäß Anspruch 14 in Wasch- und Reinigungsmittelformulierungen, Bohrflüssigkeiten, Kraftstoffadditiven, ionischen und nicht-ionischen Tensiden, Dispergiermitteln, Schmiermitteln, Prozesschemikalien für die Papier- oder Textilherstellung, kosmetischen Formulierungen oder in der Herstellung von Polyurethanen.

Europäisches Patentamt
European Patent Office
Office européen des brevets

# EUROPÄISCHER RECHERCHENBERICHT

Nummer der Anmeldung
EP 20 20 2874

| EINSCHLÄGIGE DOKUMENTE | | | |
|---|---|---|---|
| Kategorie | Kennzeichnung des Dokuments mit Angabe, soweit erforderlich, der maßgeblichen Teile | Betrifft Anspruch | KLASSIFIKATION DER ANMELDUNG (IPC) |
| Y,D | WO 2008/092767 A1 (BASF SE [DE]; MIJOLOVIC DARIJO [DE] ET AL.)<br>7. August 2008 (2008-08-07)<br>* Seite 1, Zeile 39 - Zeile 42 *<br>* Seite 4, Zeile 4 - Zeile 16 *<br>* Seite 4, Zeile 25 - Zeile 30 *<br>* Seite 17, Zeile 29 - Zeile 36 *<br>----- | 1-15 | INV.<br>C08G64/30<br>C08G64/34<br>C08G65/26 |
| Y | ROBERT F. HARRIS: "Structural features of poly(alkylene ether carbonate) diol oligomers by capillary gas chromatography",<br>JOURNAL OF APPLIED POLYMER SCIENCE,<br>Bd. 37, Nr. 1, 5. Januar 1989 (1989-01-05), Seiten 183-200, XP055622074,<br>US<br>ISSN: 0021-8995, DOI: 10.1002/app.1989.070370114<br>* Tabelle 1 *<br>----- | 1-15 | |
| Y | US 3 689 462 A (MAXIMOVICH MICHAEL J)<br>5. September 1972 (1972-09-05)<br>* das ganze Dokument *<br>----- | 1-15 | RECHERCHIERTE SACHGEBIETE (IPC)<br>C08G |
| Y | US 3 248 414 A (STEVENS HENRY C)<br>26. April 1966 (1966-04-26)<br>* Spalte 3, Zeile 55 *<br>----- | 1-15 | |

Der vorliegende Recherchenbericht wurde für alle Patentansprüche erstellt

2

| Recherchenort | Abschlußdatum der Recherche | Prüfer |
|---|---|---|
| Den Haag | 9. Februar 2021 | Hoffmann, Michael |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument
& : Mitglied der gleichen Patentfamilie, übereinstimmendes Dokument

EPO FORM 1503 03.82 (P04C03)

**ANHANG ZUM EUROPÄISCHEN RECHERCHENBERICHT ÜBER DIE EUROPÄISCHE PATENTANMELDUNG NR.** EP 20 20 2874

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

09-02-2021

| Im Recherchenbericht angeführtes Patentdokument | Datum der Veröffentlichung | Mitglied(er) der Patentfamilie | Datum der Veröffentlichung |
|---|---|---|---|
| WO 2008092767 A1 | 07-08-2008 | AT 493457 T | 15-01-2011 |
| | | CN 101611074 A | 23-12-2009 |
| | | EP 2115032 A1 | 11-11-2009 |
| | | ES 2358861 T3 | 16-05-2011 |
| | | JP 5512283 B2 | 04-06-2014 |
| | | JP 2010516796 A | 20-05-2010 |
| | | KR 20090107555 A | 13-10-2009 |
| | | PT 2115032 E | 01-02-2011 |
| | | US 2010048935 A1 | 25-02-2010 |
| | | WO 2008092767 A1 | 07-08-2008 |
| US 3689462 A | 05-09-1972 | KEINE | |
| US 3248414 A | 26-04-1966 | KEINE | |

EPO FORM P0461

Für nähere Einzelheiten zu diesem Anhang : siehe Amtsblatt des Europäischen Patentamts, Nr.12/82

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- WO 2008092767 A
- US 3404109 A
- US 3829505 A
- US 3941849 A
- US 5158922 A
- US 5470813 A
- EP 700949 A
- EP 743093 A
- EP 761708 A
- WO 9740086 A
- WO 9816310 A
- WO 0047649 A
- JP 4145123 B
- WO 0139883 A
- WO 0180994 A
- US 7304172 B2
- US 20120165549 A1


### In der Beschreibung aufgeführte Nicht-Patentliteratur


- **INOUE et al.** Copolymerization of Carbon Dioxide and Epoxide with Organometallic Compounds. *Die Makromolekulare Chemie,* 1969, vol. 130, 210-220
- **R.F. HARRIS.** *Journal of Applied Polymer Science,* 1989, vol. 37, 183-200
- **M. H. CHISHOLM et al.** *Macromolecules,* 2002, vol. 35, 6494
- **S. D. ALLEN.** *J. Am. Chem. Soc.,* 2002, vol. 124, 14284